# EUROPEAN PATENT APPLICATION

(11) **EP 4 642 076 A1**
(43) Date of publication of application: **29.10.2025**
(21) Application number: 22968903.9
(22) Date of filing: 21.12.2022
(51) Int. Cl.: H04W 24/02

(54) **COMMUNICATION METHOD AND APPARATUS, DEVICE, STORAGE MEDIUM, CHIP, PRODUCT, AND PROGRAM**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN); YOU, Xin, Dongguan, Guangdong 523860 (CN)
(74) Representative: Penza, Giancarlo
(86) International application number: PCT/CN2022/140783
(87) International publication number: WO 2024/130602

(57) **Abstract**

The embodiments of the present application provide a communication method and apparatus, a device, a storage medium, a chip, a product, and a program, which are applied to a data collection process. The method comprises: a first device sends first information to a second device, the first information at least comprising: value domain information or information domain information corresponding to collected data information; wherein the first information is associated with second information.

## Description

### TECHNICAL FIELD

Embodiments of the disclosure relate to the field of mobile communication technologies, and particularly to a communication method and apparatus, a device, a storage medium, a chip, a product and a program.

### BACKGROUND

With the continuous development of information technologies, data collection is becoming more and more important for data analysis, service improvement and/or other scenarios. However, how to provide a data collection method for performing data collection has long been a concern in the art.

### SUMMARY

Embodiments of the disclosure provide a communication method and apparatus, a device, a storage medium, a chip, a product and a program.

In a first aspect, the embodiments of the disclosure provide a communication method, which is applied to a data collection procedure and includes the following operation.

A first device transmits first information to a second device. The first information at least includes: value field information or information field information corresponding to collected data information.

Herein, the first information is associated with second information. The second information includes at least one of: data type identification information; format indication information corresponding to the value field information or the information field information; length indication information corresponding to the value field information or the information field information; first indication information for indicating whether current type of data is last single-type data contained in a data sample in the collected data information; second indication information for indicating whether current single-type data contained in the data sample in the collected data information appears; quantity indication information of data sample(s) contained in the collected data information; indication information of whether a current data sample is a last data sample in the collected data information; or data collection task identification information.

In a second aspect, the embodiments of the disclosure provide a communication method, which is applied to a data collection procedure and includes the following operation.

A second device receives first information transmitted by a first device. The first information at least includes: value field information or information field information corresponding to collected data information.

Herein, the first information is associated with second information. The second information includes at least one of: data type identification information; format indication information corresponding to the value field information or the information field information; length indication information corresponding to the value field information or the information field information; first indication information for indicating whether current type of data is last single-type data contained in a data sample in the collected data information; second indication information for indicating whether current single-type data contained in the data sample in the collected data information appears; quantity indication information of data sample(s) contained in the collected data information; indication information of whether a current data sample is a last data sample in the collected data information; or data collection task identification information.

In a third aspect, the embodiments of the disclosure provide a communication apparatus which includes a communication unit.

The communication unit is configured to transmit first information to a second device. The first information at least includes: value field information or information field information corresponding to collected data information.

Herein, the first information is associated with second information. The second information includes at least one of: data type identification information; format indication information corresponding to the value field information or the information field information; length indication information corresponding to the value field information or the information field information; first indication information for indicating whether current type of data is last single-type data contained in a data sample in the collected data information; second indication information for indicating whether current single-type data contained in the data sample in the collected data information appears; quantity indication information of data sample(s) contained in the collected data information; indication information of whether a current data sample is a last data sample in the collected data information; or data collection task identification information.

In a fourth aspect, the embodiments of the disclosure provide a communication apparatus which includes a communication unit.

The communication unit is configured to receive first information transmitted by a first device. The first information at least includes: value field information or information field information corresponding to collected data information.

Herein, the first information is associated with second information. The second information includes at least one of: data type identification information; format indication information corresponding to the value field information or the information field information; length indication information corresponding to the value field information or the information field information; first indication information for indicating whether current type of data is last single-type data contained in a data sample in the collected data information; second indication information for indicating whether current single-type data contained in the data sample in the collected data information appears; quantity indication information of data sample(s) contained in the collected data information; indication information of whether a current data sample is a last data sample in the collected data information; or data collection task identification information.

In a fifth aspect, the embodiments of the disclosure provide a first device which includes a processor and a memory.

The memory is configured to store a computer program.

The processor is configured to call the computer program stored in the memory and run the computer program to cause the first device to perform the method in the first aspect.

In a sixth aspect, the embodiments of the disclosure provide a second device which includes a processor and a memory.

The memory is configured to store a computer program.

The processor is configured to call the computer program stored in the memory and run the computer program to cause the second device to perform the method in the second aspect.

In a seventh aspect, the embodiments of the disclosure provide a computer storage medium for storing one or more programs executable by one or more processors to perform the method in the first aspect or the second aspect.

In an eighth aspect, the embodiments of the disclosure provide a chip which includes a processor for calling a computer program from a memory and running the computer program to perform the method in the first aspect or the second aspect.

In a ninth aspect, the embodiments of the disclosure provide a computer program product which includes a computer storage medium for storing a computer program. The computer program includes indications executable by at least one processor that, when executed by the at least one processor, perform the method in the first aspect or the second aspect.

In a tenth aspect, the embodiments of the disclosure provide a computer program for causing a computer to perform the method in the first aspect or the second aspect.

In the embodiments of the disclosure, a first device transmits first information to a second device, where the first information at least includes value field information or information field information corresponding to collected data information, and the first information is associated with second information. In this way, the first device can transmit the value field information or the information field information to the second device, and the first information can be associated with the second information for decoding/parsing/interpreting the value field information or the information field information, so that the communication method in the embodiments of the present disclosure can be applied to various scenarios without defining different data collection procedures for different scenarios, and thus the communication method applied to a data collection procedure in the embodiments of the present disclosure is simple and has a high extensibility.

### BRIEF DESCRIPTION OF THE DRAWINGS

The accompanying drawings, which are illustrated herein, provide a further understanding of the disclosure and constitute a part of the disclosure. The exemplary embodiments of the disclosure and their description are used to explain the disclosure and not to unduly limit the disclosure. In the drawings:
FIG. 1 is a diagram of an application scenario according to an embodiment of the disclosure.
FIG. 2 is a diagram of another application scenario according to an embodiment of the disclosure.
FIG. 3 is a diagram of yet another application scenario according to an embodiment of the disclosure.
FIG. 4 is a flowchart of a communication method provided in an embodiment of the disclosure.
FIG. 5 is a flowchart of another communication method provided in an embodiment of the disclosure.
FIG. 6 is a flowchart of yet another communication method provided by an embodiment of the disclosure.
FIG. 7 is a flowchart of still another communication method provided in an embodiment of the disclosure.
FIG. 8 is a structural diagram of a communication apparatus provided in an embodiment of the disclosure.
FIG. 9 is a structural diagram of another communication apparatus provided in an embodiment of the disclosure.
FIG. 10 is a structural diagram of a communication device provided in an embodiment of the disclosure.
FIG. 11 is a structural diagram of a chip according to an embodiment of the disclosure.

### DETAILED DESCRIPTION

The technical solutions in the embodiments of the disclosure would be described below in conjunction with the accompanying drawings in the embodiments of the disclosure. It is apparent that the described embodiments are a part of the embodiments of the disclosure, rather than all of the embodiments. Based on the embodiments of the disclosure, all other embodiments obtained by those of ordinary skill in the art without creative effort fall within the scope of protection of the disclosure.

The technical solutions described in embodiments of the disclosure may be combined in various ways without conflict. In the description of the disclosure, "a plurality of/multiple" means two or more unless otherwise explicitly and specifically defined.

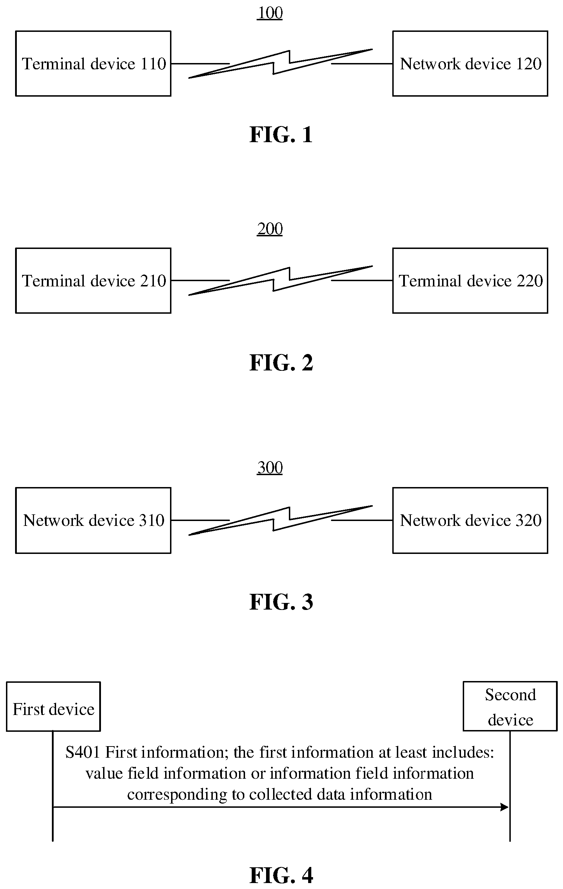

FIG. 1 is a diagram of an application scenario according to an embodiment of the disclosure. As illustrated in FIG. 1, a communication system 100 may include a terminal device 110 and a network device 120. The network device 120 may communicate with the terminal device 110 through an air interface. Multi-service transmissions are supported between the terminal device 110 and the network device 120.

FIG. 2 is a diagram of another application scenario according to an embodiment of the disclosure. As illustrated in FIG. 2, a communication system 200 may include a terminal device 210 and a terminal device 220. The terminal device 210 may communicate with the terminal device 220 by means of a wired connection or a wireless connection. Multi-service transmissions are supported between the terminal device 210 and the terminal device 220.

FIG. 3 is a diagram of yet another application scenario according to an embodiment of the disclosure. As illustrated in FIG. 3, a communication system 300 may include a network device 310 and a network device 320. The network device 310 may communicate with the network device 320 by means of a wired connection or a wireless connection. Multi-service transmissions are supported between the network device 310 and the network device 320.

In any of the embodiments of the disclosure, the network device includes one or a combination of at least two of: an access network device, a core network device, an Operation Administration and Maintenance (OAM) device, or a data collection device.

In any of the embodiments of the disclosure, the access network device may provide communication coverage for a particular geographic area and may communicate with a terminal device located within the coverage area.

In any of the embodiments of the disclosure, the core network device may be any one core network device or a combination of any multiple core network devices specified in protocols prior to the disclosure.

In any of the embodiments of the disclosure, the data collection device may be a device within or outside the core network. Optionally, the data collection device may be any one core network device or a combination of any multiple core network devices specified in protocols prior to the disclosure. Alternatively, the data collection device may be integrated in any one or multiple core network devices specified in protocols prior to the disclosure. Alternatively, the data collection device may be a core network device newly defined in a protocol later than the disclosure, or may be a device outside the core network.

In any of the embodiments of the disclosure, the data collection device may be a device within or outside the access network. Optionally, the data collection device may be any one access network device or a combination of any multiple access network devices specified in protocols prior to the disclosure. Alternatively, the data collection device may be integrated in any one or multiple access network devices specified in protocols prior to the disclosure. Alternatively, the data collection device may be an access network device newly defined in a protocol later than the disclosure, or may be a device outside the access network.

An OAM device may be used for administration and maintenance operations of communication networks. The functions of the OAM device may include at least one of: an link performance detection, including monitoring various performances (e.g., measurements of a packet loss, latency, jitter, and the like) of the link and statistics of various types of traffic; fault detection and alarm, including detecting a connectivity of the link by transmitting a detection message and notifying the network administrator in time when detecting a link failure; or a loopback test, including detecting the link failure through a loop back of a non-Ethernet OAM protocol message.

The terminal devices and the network devices illustrated in FIGS. 1 to 3 are not used to limit the number of the terminal devices and the network devices in the communication system. For example, the communication system may include multiple network devices, and the respective number of network devices may be included within the coverage area of each of the network devices, which would not be limited in embodiments of the present disclosure.

It should be understood that the embodiments of the present disclosure are described only using the communication systems corresponding to FIGS. 1 to 3 as examples, and the embodiments of the present disclosure are not limited thereto. That is, the technical solutions in the embodiments of the present disclosure can be applied to various communication systems, such as a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an Advanced Long Term Evolution (LTE-A) system, a New Radio (NR) system, an evolution system of the NR system, a LTE-based access to unlicensed spectrum (LTE-U) system, a NR-based access to unlicensed spectrum (NR-U) system, a Universal Mobile Telecommunications System (UMTS), a Wireless Local Area Network (WLAN), a Wireless Fidelity (WiFi), an LTE Time Division Duplex (TDD), a Universal Mobile Telecommunications System (UMTS), an Internet of Things (IoT) system, a Narrow Band Internet of Things (NB-IoT) system, an enhanced Machine-Type Communications (eMTC) system, or a future communication system (e.g., a sixth generation (6G) communication system, a seventh generation (7G) communication system), or the like.

The terminal device in the disclosure is a device with a wireless communication function, which may be arranged on land including indoor or outdoor areas, handheld or on-board, or may be arranged on the water (such as on a ship), or may be arranged in the air (such as on an airplane, a balloon, or a satellite). The terminal device in the disclosure may be referred to as User Equipment (UE), a Mobile Station (MS), a Mobile Terminal (MT), a user unit, a user station, a mobile station, a remote station, a remote terminal, a mobile device, a user terminal, a terminal, a wireless communication device, a user agent or a user apparatus. The terminal device may include one or a combination of at least two of the following: an Internet of Things (IoT) device, a satellite terminal, a Wireless Local Loop (WLL) station, a Personal Digital Assistant (PDA) device, a handheld device with a wireless communication function, a computing device or another processing device connected to a wireless modem, a server, a mobile phone, a tablet computer (or Pad), a computer with a wireless transceiver function, a handheld computer, a desktop computer, a PDA, a portable media player, a smart speaker, a navigation apparatus, a wearable device (such as a smart watch, smart glasses, or a smart necklace), a pedometer, a digital TV, a Virtual Reality (VR) terminal device, an Augmented Reality (AR) terminal device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, or a vehicle, an on-board device, an on-board module, a wireless modem, a handheld device, a Customer Premise Equipment (CPE), a smart home appliance in a vehicle to everything (V2X) system or the like.

Optionally, the terminal device may be any terminal device, which includes but is not limited to a terminal device in wired or wireless connection with the network device 120 or another terminal device. Optionally, the terminal device may be used for a device to device (D2D) communication.

The access network device may include one or a combination of at least two of the following: an Evolutional Node B (eNB or eNodeB) in the LTE system, a Next Generation Radio Access Network (NG RAN) device, a base station (gNB) in the NR system, a small station, a micro station, a radio controller in a Cloud Radio Access Network (CRAN), a Wi-Fi access point, a transmission reception point (TRP), a relay station, an access point, an on-board device, a wearable device, a hub, a switch, a bridge, a router, a network device in a future evolved Public Land Mobile Network (PLMN), or the like.

The core network device may be a 5G core (5GC) device. The core network device may include one or a combination of at least two of the following: an Access and Mobility Management Function (AMF), an Authentication Server Function (AUSF), a User Plane Function (UPF), or a Session Management Function (SMF), a Location Management Function (LMF), or a Policy Control Function (PCF). In other embodiments, the core network device may also be an Evolved Packet Core (EPC) device in the LTE network, for example, a Session Management Function + Core Packet Gateway (SMF+PGW-C) device. It should be understood that the SMF+PGW-C can achieve functions that can be achieved by the SMF and the PGW-C. In the process of the network evolution, the core network device may also be referred to as other names, or may be a new network entity formed by dividing the functions of the core network, which would not be limited in the embodiments of the present disclosure.

Connections can be established between various functional units in the communication system through Next Generation (NG) interfaces for achieving communication.

For example, the terminal device establishes air interface connection with the access network device through an NR interface for transmission of user plane data and control plane signaling. The terminal device may establish a control plane signaling connection with the AMF through an NG interface 1 (N1 for short). The access network device, such as a next generation radio access base station (gNB), may establish a user plane data connection with the UPF through an NG interface 3 (N3 for short). The access network device may establish a control plane signaling connection with the AMF through an NG interface 2 (N2 for short). The UPF may establish a control plane signaling connection with the SMF through an NG interface 4 (N4 for short). The UPF may interact user plane data with a data network through an NG interface 6 (N6 for short). The AMF may establish a control plane signaling connection with the SMF through an NG interface 11 (N11 for short). The SMF may establish a control plane signaling connection with the PCF through an NG interface 7 (N7 for short).

In addition, the terms "system" and "network" in the disclosure may usually be used interchangeably. In the disclosure, the term "and/or" refers to only an association relationship for describing associated objects and represents that three relationships may exist. For example, A and/or B may represent three cases: i.e., only A exists, both A and B exist, and only B exists. Furthermore, character "/" in the disclosure usually represents that previous and next associated objects form an "or" relationship. It should also be understood that the term "indication/indicate/indicating" mentioned in the embodiments of the disclosure may be a direct indication, or may be an indirect indication, or may represent existence of an association relationship. For example, A indicates B, which may represent that A directly indicates B, for example, B may be obtained by A; or may represent that A indirectly indicates B, for example, A indicates C, and B may be obtained by C; or may represent that an association relationship exists between A and B. It should also be understood that the term "corresponding/correspondence/correspond" mentioned in the embodiments of the present disclosure may indicate that there are direct or indirect correspondences between two objects, or may indicate that there is an association relationship between the two objects, or may have an indicating and being indicated relationship, a configuring and being configured relationship, or the like. It should also be understood that the terms "predefined/predefinition", "agreed/predefined by a protocol", "pre-determined/predetermination" or "predefined rules" mentioned in the embodiments of the present disclosure may be implemented by pre-storing corresponding codes or tables or other means that may be used to indicate relevant information in devices (e.g., including terminal devices and network devices), specific implementations of which are not limited herein. For example, the "predefined" may refer to what is defined in protocol. It should also be understood that in the embodiments of the present disclosure, the "protocol" may refer to standard protocols in the communication field, and may include, for example, an LTE protocol, an NR protocol and related protocols applied in future communication systems, which are not limited in the present disclosure.

For convenience of understanding of the technical solutions in the embodiments of the disclosure, related technologies in the embodiments of the disclosure are described. The following related technologies may be used as alternative solutions and may be combined with the technical solutions in the embodiments of the disclosure in various ways, and the technical solutions obtained by the combinations belong to the scope of protection of the embodiments of the disclosure.

The following several functions are introduced into 5G.

Self-Organizing Network (SON) mechanism and Minimization of Drive Tests (MDT) mechanism functions, mainly used for data collection related to functional optimization, for example, collection of data required for handover optimization, coverage optimization, random access optimization, and/or similar functions. The OAM entity operates as the data collection agent. The utilization of the collected data and a definition of the optimization actions are all implementation-dependent.

A Network Data Analytics Function (NWDAF) entity, deployed in the core network and mainly used for functional optimization analysis. For each optimization objective, the NWDAF entity defines data types to be collected and possible data sources, and the NWDAF entity also provide possible optimization analysis action outputs. Of course, how to use the collected data to obtain the optimization analysis action outputs is also implementation-dependent.

A Management Data Analytics (MDA) function entity, deployed in the OAM and mainly used for the functional optimization analysis. For each optimization objective, the MDA entity defines the data types to be collected and possible data sources, and the MDA entity also provide possible optimization analysis action outputs. Of course, how to use the collected data to obtain the optimization analysis outputs is also implementation-dependent. Unlike the NWDAF, the MDA function entity can even use the data output by the NWDAF entity.

However, in the related arts, the SON and MDT data collection methods are basically defined according to functional scenarios. Even if the data types collected by different functional scenarios overlap, the data collection procedures corresponding to different functional scenarios are still independently performed. This approach is not only complicated but also has a poor extensibility because even if the collected data types are similar to that of an existing functional scenario, a separate data collection procedure must be redefined independently. Such a definition method not only additionally increases standardization efforts, but also hinders sharing of the same type of collected data cross functional scenarios or domains (e.g., across different communication nodes, different operators, different manufacturers, or the like). On the other hand, in the related art, the data collection procedure is performed at a granularity of a functional scenario (one functional scenario usually corresponds to a set of collected data types), which restricts finer-grained data collection implementations.

For convenience of understanding of the technical solutions in the embodiments of the disclosure, the technical solutions of the disclosure will be described in detail below with reference to specific embodiments. The above related technologies may be used as alternative solutions and may be combined with the technical solutions of the embodiments of the disclosure in various ways, and the technical solutions obtained by the combinations belong to the scope of protection of the embodiments of the disclosure. The embodiments of the disclosure include at least part of the following contents.

First, a first device and a second device will be described.

In some embodiments, the first device is a terminal device, and the second device is a network device. In other embodiments, the first device is a first terminal device, and the second device is a second terminal device. In still other embodiments, the first device is a network device, and the second device is a terminal device. In still other embodiments, the first device is a first network device and the second device is a second network device.

In some embodiments, the network device includes one or a combination of at least two of: an access network device, a core network device, an OAM device, or a data collection device.

FIG. 4 is a flowchart of a communication method provided in an embodiment of the disclosure. As illustrated in FIG. 4, the communication method is applied to a data collection procedure and includes the following operation S401.

At the operation S401, a first device transmits first information to a second device. The second device receives the first information transmitted by the first device. The first information at least includes: value field information or information field information corresponding to collected data information.

Optionally, the first information is associated with second information, and the second information includes at least one of: data type identification information (information 1); format indication information (information 2) corresponding to the value field information or the information field information; length indication information (information 3) corresponding to the value field information or the information field information; first indication information (information 4) for indicating whether current type of data is last single-type data contained in a data sample in the collected data information; second indication information (information 5) for indicating whether current single-type data contained in the data sample in the collected data information appears; quantity indication information (information 6) of data sample(s) contained in the collected data information (which can be understood as: quantity indication information of the data sample(s) contained in the collected data information to be reported in the current round); indication information (information 7) of whether a current data sample is a last data sample in the collected data information (which can be understood as: indication information of whether the current data sample is the last data sample in the collected data information to be reported in the current round); or data collection task identification information (information 8).

Optionally, the first information may be applied to the data collection procedure.

Optionally, in other embodiments, the collected data information may be replaced with one of: collection data, collection information, collection data information, collected data, or collected information, or the like.

Optionally, the value field information may include at least one bit value. For example, the value field information may include '01', '00', or '111', or the like.

Optionally, the information field information may include a set of at least one piece of information. Optionally, the information field may include a semantic information field or an actual meaning information field.

Optionally, the value field information corresponding to the collected data may occupy at least one bit and may be used to represent a value of the corresponding data. For example, assuming that the protocol stipulates that a value range corresponding to a data type 1 is [1, 12], and stipulates that a binary value '00' is reported when a value of the data type 1 belongs to [1, 3), a binary value '01' is reported when the value of the data type 1 belongs to [3, 6), a binary value '10' is reported when the value of the data type 1 belongs to [6, 9), and a binary value '11' is reported when the value of the data type 1 belongs to [9, 12], then the information field containing the above binary value is referred to as the value field information corresponding to the data type 1. For another example, there are 1008 kinds of Physical Cell Identities (PCIs) in the NR system, any one of the PCIs can be represented by a different value of an information field composed of 10 binary bits, and the information field composed of the 10 binary bits is referred to as value field information corresponding to PCI information.

Optionally, the second device may decode/parse/interpret the value field information or the information field information corresponding to the collected data information based on the second information or based on at least one of the information 1 to the information 8. In this way, the second device needs to obtain at least one of the information 1 to the information 8, and thus correctly decode/parse/interpret the actual meaning expressed by the collected data information. Optionally, after obtaining the first information, the second device may interpret the value field information or the information field information corresponding to the collected data information in the first information based on the second information, to determine which parameters are included in the value field information or the information field information and to determine how to extract bits corresponding to each parameter.

Optionally, the data type identification information (information 1) may correspond to an optional information field. Optionally, the data type identification information may occupy at least one bit. Optionally, different pieces of data type identification information are used to distinguish different types of data. For example, it is defined that the data type identification information designated as Identifier 1 is associated with location information of the first device and the data type identification information designated as Identifier 2 is associated with a Reference Signal Received Power (RSRP) measurement result of a cell. Then, once a corresponding data type identifier is determined, a corresponding information type can be ascertained, so that a specific meaning of the value field information associated with the data type identifier can be interpreted by using the definition of the corresponding information.

Optionally, the format indication information (information 2) corresponding to the value field information or the information field information may correspond to an optional information field. Optionally, the information 2 may occupy at least one bit. The value field information is taken as an example: optionally, there may be multiple value field information format definitions for the same type of data, where different value field information formats occupy different numbers of bits or have different interpretation methods. For example, when defining the RSRP measurement result of the cell, 32 different value ranges may be associated if 5 binary bits are used to define the RSRP measurement result, while 1024 different value ranges may be associated if 10 binary bits are used to define the RSRP measurement result. Since the actual value range of the RSRP measurement result of the cell is fixed, the RSRP measurement result defined by 10 binary bits has smaller value field information step and higher quantization accuracy than the RSRP measurement result defined by 5 binary bits. The reason why different data value field information formats are defined for the same type of data is to consider different application scenarios. For example, when the data collection node does not have high requirements for the accuracy of the collected RSRP measurement results of the cell, the 5-bit definition method may be applied for data reporting, which saves a reporting overhead (of course, the premise is that the data accuracy still meets requirements). When the data collection node has high requirements for the accuracy of the collected RSRP measurement results of the cell, the 10 bit definition method may be applied for data reporting, to ensure the accuracy of the reported data. For example, the information 2 occupies 2 bits, which can represent up to 4 value field information formats. Optionally, the meaning of each value field information format is specified by default, or by a protocol, or by a manner of a pre-definition.

Optionally, the length indication information (information 3) corresponding to the value field information or the information field information may correspond to an optional information field. Optionally, the information 3 may occupy at least one bit. The information 3 and the information 2 have similar functions, both of which provide format information corresponding to the value field information of the corresponding type of data. While the information 3 directly specifies the number of bits occupied by the value field information of the corresponding type of data in an explicit manner, and the information 3 is more suitable for a data collection node to decode/parse/interpret the meaning of the value field information of the corresponding type of data without any priori format information.

Optionally, the first indication information (information 4) may correspond to an optional information field. Optionally, the first indication information may occupy at least one bit.

Here, a data sample in the collected data information is described.

The data sample may represent a single instance of the same type of data. The data type corresponding to the data sample may be a single type or a composite type. Optionally, the data sample may include single-type data or composite-type data. Optionally, the single-type data refers to a data sample having one piece of value field information. Optionally, the composite-type data includes at least two types of single-type data. Optionally, the data sample may include at least two pieces of value field information or at least two pieces of information field information, and data type identifiers associated with different pieces of value field information or different pieces of information field information may be the same or different.

For example, in a data collection task 1, the first device is required to record its own location information every one hour starting from 12:00 on December 4, 2022, and record for a total of 24 hours. In this case, the first device records its own location information 24 times in total upon completing the task, and obtains collected data composed of 24 pieces of data, each of which is referred to as a data sample in the collected data.

Further exemplarily, in a data collection task 2, the first device is required to report RSRP measurement results corresponding to best cells measured on a frequency point 1 to the network device every 60 seconds, where the first device performs measurements of cells on the frequency point 1 every 1 second and only records a RSRP measurement result corresponding to a best cell measured on the frequency point 1 in every time. Upon each task completion (every 60 seconds), the first device obtains 60 pieces of composite-type data, each of which is composed of PCI information of the cell and the RSRP measurement result information obtained by measuring the cell (since not only the frequency point information but also the corresponding PCI information are required for measuring the cell, the RSRP measurement result of the corresponding cell can be measured after determining these two pieces of information. However, it is meaningless to only report the RSRP measurement results of the cells, because a data acquirer cannot know which cell the respective RSRP measurement result belongs to from only the RSRP measurement results, so that the data acquirer cannot effectively utilize these reported RSRP measurement results. Therefore, each RSRP measurement result needs to be reported together with PCI information associated with the RSRP measurement result. Optionally, the frequency point information may be obtained indirectly through the task identifier, or may also be reported together with the RSRP measurement result and the PCI information). In this case, each of the 60 pieces of data is referred to as a data sample in the collected data, and the data sample here is composite-type data.

Optionally, the data sample may be composite-type data containing at least two types of single-type data.

Table 1 is an example in which the first indication information is described through one piece of composite-type data.

**Table 1 Example of the first indication information**

| | | | |
|---|---|---|---|
| Identifier corresponding to a RSRP data type | Information 2 and/or information 3 | Value field information of the data sample corresponding to the RSRP data type | Not the last single-type data contained in the data sample (i.e., information 4) |
| Identifier corresponding to a PCI data type | Information 2 and/or information 3 | Value field information of the data sample corresponding to the PCI data type | Not the last single-type data contained in the data sample (i.e., information 4) |
| Identifier corresponding to a frequency point data type | Information 2 and/or information 3 | Value field information of the data sample corresponding to the frequency point data type | Not the last single-type data contained in the data sample (i.e., information 4) |
| Identifier corresponding to a location information data type | Information 2 and/or information 3 | Value field information of the data sample corresponding to the location information data type | Not the last single-type data contained in the data sample (i.e., information 4) |
| Identifier corresponding to a time information data type | Information 2 and/or information 3 | Value field information of the data sample corresponding to the time information data type | The last single-type data contained in the data sample (i.e., information 4) |

In Table 1, the composite-type data consists of five types of single-type data (which are RSRP information, PCI information, frequency point information, location information and time information, respectively). The core of the composite-type data is the RSRP data of the cell. The PCI information (i.e., PCI data) and the frequency point information (i.e., frequency point data) can provide which cell the RSRP measurement result is measured from. The location information (i.e., location information data) can indicate the location of the measurement entity (e.g., the first device) itself when obtaining the RSRP measurement result of the cell. The time information (i.e., time information data) can indicate the corresponding time when obtaining the RSRP measurement result of the cell. In this way, by using the different values of the information 4 (the first four pieces of information 4 in Table 1 indicate that the current type of data is not the last single-type data contained in the data sample, and the last piece of information 4 indicates that the current type of data is the last single-type data contained in the data sample), the ending position of information fields for the data sample can be clearly obtained, thereby continuing to decode/parse/interpret the next data sample.

Optionally, the second indication information (information 5) may correspond to an optional information field. Optionally, the second indication information may occupy at least one bit.

Table 2 is an example in which the second indication information is described through one piece of composite-type data.

**Table 2 Example of the second indication information**

| | | | | |
|---|---|---|---|---|
| | Identifier corresponding to a RSRP data type | Information 2 and/or information 3 | Value field information of the data sample corresponding to the RSRP data type | Not the last single-type data contained in the data sample (i.e., information 4) |
| | Identifier corresponding to a PCI data type | Information 2 and/or information 3 | Value field information of the data sample corresponding to the PCI data type | Not the last single-type data contained in the data sample (i.e., information 4) |
| | Identifier corresponding to a frequency point data type | Information 2 and/or information 3 | Value field information of the data sample corresponding to the frequency point data type | Not the last single-type data contained in the data sample (i.e., information 4) |
| Current single-type data appears (i.e., information 5) | Identifier corresponding to a location information data type | Information 2 and/or information 3 | Value field information of the data sample corresponding to the location information data type | Not the last single-type data contained in the data sample (i.e., information 4) |
| Current single-type data does not appear (i.e., information 5) | Identifier corresponding to a time information data type | Information 2 and/or information 3 | Value field information of the data sample corresponding to the time information data type | The last single-type data contained in the data sample (i.e., information 4) |

In Table 2, for the RSRP measurement result of the cell, what is more important are actually the RSRP information (i.e., RSRP data), the PCI information (i.e., PCI data), and the frequency point information (i.e., frequency point data), so that the data receiving node (e.g., the second device) can specifically interpret which cell is measured to obtain the RSRP measurement result. However, the remaining location information (i.e., location information data) and time information (i.e., time information data) may or may not appear. Even if there are no location information and time information, no problem would be caused. Therefore, the location information and/or time information are optional information to be appeared in the data sample, thereby increasing the flexibility for reporting the data sample through the information 5.

For example, the first device needs to report three pieces of composite-type data defined in Table 2. For the first data sample, there are the RSRP information, the PCI information and the frequency point information fields. For the second data sample, there are the RSRP information, the PCI information, and the frequency point information fields as well as the location information field. For the third data sample, there are the RSRP information, the PCI information, and the frequency point information fields as well as the location information field and the time information field. In this way, the differentiated instance reporting for the same type of composite data can be realized through the information 5, thereby improving the flexibility of the data reporting.

Optionally, there may be two meanings for a value of "current single-type data does not appear" of the information 5.

In the first meaning, no value field information of the current single-type data contained in the current data sample is obtained.

In the second meaning, the value field information of the current single-type data contained in the current data sample has the same value as the value field information corresponding to the latest data sample containing the same single-type data.

The second meaning can save overhead of the data reporting. Of course, the piece(s) of single-type data included in one data sample which is/are required to be associated with the information 5 may be transmitted from the first device to the second device, or may be transmitted from the second device to the first device, or may be default information, or may be predefined information, or may be information predefined by a protocol, or may be information determined by the first device or the second device based on a pre-configuration, which is not limited in the disclosure.

Optionally, the quantity indication information (information 6) of the data sample(s) contained in the collected data information may correspond to an optional information field. Optionally, the information 6 may occupy at least one bit.

Optionally, the information 6 may allow the first device to know the number of this type of data to be reported, and the second device may also know when the current round of data transmission will end based on the information 6, thereby controlling the administration of corresponding resources. For example, if the first device is going to report 10 pieces of location information recorded by itself in the current round, the value of the information 6 should be 10.

Optionally, the indication information (information 7) of whether the current data sample is the last data sample in the collected data information may correspond to an optional information field. Optionally, the information 7 may occupy at least one bit.

Optionally, the information 7 and the information 6 have similar functions, both of which can be used to determine the ending position of the data transmission, but the information 7 allows the data collection node to dynamically determine whether the current round of the data transmission is ended without priori information similar to the information 6. The information 7 is very suitable for the data collection node to dynamically determine the ending position of the current round of the data transmission without any priori information.

Optionally, the data collection task identification information (information 8) may correspond to an optional information field. Optionally, the information 8 may occupy at least one bit.

Optionally, the data collection task identification information may be determined by the first device based on a pre-configuration, or may be transmitted from the second device to the first device, or may be predefined by a protocol. As an example that the data collection task identification information is transmitted from the second device to the first device, the second device may trigger a data collection task. When configuring the data collection task to the first device, the second device needs to provide not only data collection task configuration information including at least one of data type identification information, restriction configuration information, or data reporting configuration information or the like, but also corresponding data collection task identification information. In this way, the data collection task identification information may be associated with part or all of the data collection task configuration information, so that the first device, when reporting the collected data, provides the data collection task identification information instead of providing the part or all of the data collection task configuration information, which is beneficial to reducing the overhead of reporting the collected data. For example, the second device issues, to the first device, a data collection task 1, specifically, recording a RSRP measurement result of a cell 1 every 1 second starting from the receipt of the data collection task configuration information, the total time duration of the data collection is 1 minute, the cell 1 is associated with a PCI1 and a frequency point 1, and the data collection task identifier corresponding to the data collection task 1 is ID1. In such a case, the first device may only report the data collection task identifier ID1 and 60 RSRP measurement results when reporting data, this is because the second device, as an initiator of the task, already knows the association relationship between the data collection task identifier ID1 and the data collection task configuration information (which refers to the PCIl and the frequency point 1 information associated with the cell 1 herein), thus there is no need to report these pieces of information by the first device once again.

In the embodiments of the disclosure, a first device transmits first information to a second device, where the first information at least includes value field information or information field information corresponding to collected data information, and the first information is associated with second information. In this way, the first device can transmit the value field information or the information field information to the second device, and the first information can be associated with the second information for decoding/parsing/interpreting the value field information or the information field information, so that the communication method in the embodiments of the present disclosure can be applied to various scenarios without defining different data collection procedures for different scenarios, and thus the communication method applied to a data collection procedure in the embodiments of the present disclosure is simple and has a high extensibility.

Three manners for obtaining part or all of the second information are provided as follows.

### First manner

For the first device side: in some embodiments, the method further includes that: the first device transmits part or all of the second information to the second device. For the second device side: in some embodiments, the method further includes that: the second device receives the part or all of the second information transmitted by the first device.

Optionally, at least one of the information 1 to the information 8 as well as the value field information/information field information corresponding to the collected data information may be successively transmitted to the second device. For example, the first device may transmit, to the second device, the value field information/information field information, and then transmit the at least one of the information 1 to the information 8. For another example, the first device may transmit, to the second device, the at least one of the information 1 to the information 8, and then transmit the value field information/information field information.

Optionally, the first information may further include at least one of the information 1 to the information 8. That is, the first device transmits the first information to the second device, where the first information includes the value field information/information field information corresponding to the collected data information and the at least one of the information 1 to the information 8. In other words, the first device not only reports the value field information/information field information corresponding to the collected data information to the second device, but also provides decoding format information required for correctly interpreting the value field information.

Optionally, if the at least one of the information 1 to the information 8 is transmitted to the second device together with the value field information/information field information corresponding to the collected data information, an order, between the at least one of the information 1 to the information 8 and the value field information/information field information corresponding to the collected data information, is specified by default, or specified by a protocol, or predefined.

### Second manner

For the first device side: in some embodiments, the method further includes that: the first device receives part or all of the second information transmitted by the second device. For the second device side: in some embodiments, the method further includes that: the second device transmits the part or all of the second information to the first device.

Optionally, the part or all of the second information may be information received by the first device from the second device before the first device transmits the first information. In this way, the second device, as a data collection node, firstly informs the first device of part or all of the second information as encoding format information for the collected data, and the first device transmits the first information based on the encoding format information corresponding to the collected data information and provided by the second device. Because the encoding format information for the collected data is provided from the second device to the first device, the collected data information provided by the first device is not required to contain or explicitly contain corresponding decoding format information for decoding the collected data information, and the second device, as the provider of the encoding format information, can directly decode the collected data information provided by the first device.

For example, the first device receives the part or all of the second information transmitted by the second device through S501 or S602 or S703 or S701.

### Third manner

In some embodiments, the part or all of the second information is default information, or predefined information, or information agreed by a protocol, or information determined by the first device or the second device based on a pre-configuration.

For example, a decoding rule (corresponding to part or all of the second information) corresponding to the collected data information is specified in a protocol plaintext form.

Optionally, the second information (i.e., part or all of the information 1 to the information 8) may be performed by any one or more of the above first manner to the third manner. For example, a first part of the information 1 to the information 8 is performed by the first manner, and/or a second part of the information 1 to the information 8 is performed by the second manner, and/or a third part of the information 1 to the information 8 is performed by the third manner, which are not limited in the disclosure. Optionally, the union of one or at least two of the first part, the second part, or the third part is the part or all of the information 1 to the information 8. Optionally, the information in any two of the first part, the second part, or the third part may or may not overlap.

Optionally, in an implementation scenario, the first device may encode the collected data information based on the second information associated with the first information to obtain the value field information or the information field information corresponding to the collected data information. Optionally, the second device may decode the value field information or the information field information corresponding to the collected data information based on the second information associated with the first information to obtain the collected data information.

In some embodiments, a resource for transmitting the first information is a control plane resource or a user plane resource.

For example, the control plane resource may include: a control message of a Signaling Radio Bearer (SRB). For example, the control plane resource may include: a Radio Resource Control (RRC) message or a Non-Access Stratum (NAS) message or another protocol layer control message.

For example, the user plane resource may include: a Data Radio Bearer (DRB) or an Artificial Intelligence Radio Bearer (ARB).

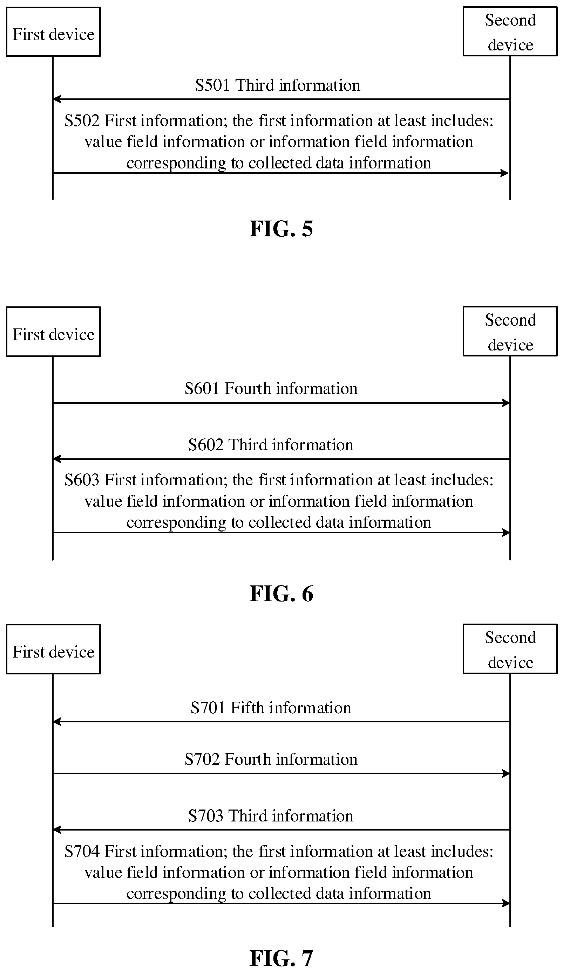

FIG. 5 is a flowchart of another communication method provided in an embodiment of the disclosure. As illustrated in FIG. 5, the communication method is applied to a data collection procedure, and the method includes the following operations S501 to S502.

At the operation S501, as an optional operation, a second device transmits third information to a first device, and the first device receives the third information transmitted by the second device.

At the operation S502, the first device transmits first information to the second device, and the second device receives the first information transmitted by the first device. The first information at least includes value field information or information field information corresponding to collected data information.

In other embodiments, unlike the embodiment corresponding to FIG. 5, the first device may determine the third information based on a pre-configuration or the third information may be predefined by a protocol.

Optionally, the third information may be applied to the data collection procedure.

Optionally, the third information includes or indicates at least one of: at least one piece of data collection task identification information; at least one piece of data type identification information; resource configuration information for transmitting the first information; first quantity information for indicating at least one of: a total amount of information required to be transmitted, an upper limit of the total amount, or a level of the total amount; or first filtering requirement information for indicating a target condition required to be satisfied by the information required to be transmitted.

Optionally, the third information may be used to control the first device to transmit the collected data information to the second device.

Optionally, resource configuration information for the first device to receive the third information may be determined by the first device based on a pre-configuration, or may be indicated by the second device to the first device, or may be default, or may be predefined by a protocol. Optionally, resource configuration information for the second device to transmit the third information may be determined by the second device based on a pre-configuration, or may be indicated by the first device to the second device, or may be default, or may be predefined by a protocol.

Optionally, the first quantity information may be used to indicate at least one of: a total amount of collected data information required to be transmitted in current round, an upper limit of the total amount, or a level of the total amount.

Optionally, the first filtering requirement information is used to indicate a target condition required to be satisfied by collected data information to be transmitted in current round.

Optionally, the first device may perform multiple data collection tasks simultaneously. Considering the limitations of data transmission resources for the first device, the second device may restrict the type(s) of the collected data information that can be transmitted by the first device through the at least one piece of data collection task identification information. After the first device receives the at least one piece of data collection task identification information included in the third information, the first device may only need to transmit the collected data associated with the at least one piece of data collection task identification information. One piece of data collection task identification information is associated with one piece of data type identification information or a set of data type identification information, and the second device will configure this association relationship to the first device. Optionally, the set of data type identification information may include one or more pieces of data type identification information.

Optionally, the at least one piece of data type identification information directly indicates the type(s) of the collected data information required to be transmitted by the first device. After the first device receives the at least one piece of data type identification information included in the third information, the first device only needs to transmit the collected data corresponding to the at least one piece of data type identification information. Optionally, the data type identification information may represent single-type data or composite-type data.

Alternatively, information required to be transmitted may be replaced with information to be transmitted.

Optionally, the resource configuration information includes or indicates at least one of: time domain resource information, frequency domain resource information, spatial domain resource information, code domain resource information, Logical Channel Identifier (LCID) information, or configuration information corresponding to a Radio Bearer (RB). Optionally, the resource may be replaced with a radio resource.

Optionally, the resource configuration information for transmitting the first information may include at least one of: time domain resource information corresponding to an uplink grant (UL grant) used for transmitting the first information; frequency domain resource information corresponding to the UL grant used for transmitting the first information; LCID information used for transmitting the first information; or configuration information corresponding to an RB used for transmitting the first information.

Optionally, a one-to-one mapping relationship or a one-to-many mapping relationship exists between the resource configuration information and the data collection task identification information.

Optionally, a one-to-one mapping relationship or a one-to-many mapping relationship exists between the resource configuration information and the data type identification information.

Optionally, the resource configuration information and the data collection task identification information included in the third information are in a one-to-one mapping relationship or a one-to-many mapping relationship. That is, one set of resource configuration information is associated with one piece of data collection task identification information included in the third information or one set of resource configuration information is associated with multiple pieces (including all scenarios) of data collection task identification information included in the third information.

Optionally, the resource configuration information and the data type identification information included in the third information are in a one-to-one mapping relationship or a one-to-many mapping relationship. That is, one set of resource configuration information is associated with one piece of data type identification information included in the third information or one set of resource configuration information is associated with multiple pieces (including all scenarios) of data type identification information included in the third information (for a composite-type data scenario, it may also be considered that one set of resource configuration information is associated with multiple pieces of data type identification information included in the third information).

Optionally, a level of the total amount may correspond to a value range of the total amount. Optionally, the second device may restrict, based on its own requirements, a total amount of information transmitted by the first device, or an upper limit of the total amount, or a level of the total amount; or, the first device may determine, based on a pre-configuration or a predefinition by a protocol, a total amount of information transmitted by the first device, or an upper limit of the total amount, or a level of the total amount. Optionally, if the first quantity information indicates the upper limit of the total amount, the amount of data included in the first information transmitted by the first device should be less than or equal to the upper limit of the total amount. If the first quantity information indicates the level of the total amount, the amount of data included in the first information transmitted by the first device should belong to the total amount range associated with the level of the total amount.

Optionally, a one-to-one mapping relationship or a one-to-many mapping relationship exists between the first quantity information and the data collection task identification information.

Optionally, a one-to-one mapping relationship or a one-to-many mapping relationship exists between the first quantity information and the data type identification information.

Optionally, the first quantity information and the data collection task identification information included in the third information are in a one-to-one mapping relationship or a one-to-many mapping relationship. That is, one piece of first quantity information is associated with one piece of data collection task identification information included in the third information, or one piece of first quantity information is associated with multiple pieces (including all scenarios) of data collection task identification information included in the third information.

Optionally, the first quantity information and the data type identification information included in the third information are in a one-to-one mapping relationship or a one-to-many mapping relationship. That is, one piece of first quantity information is associated with one piece of data type identification information included in the third information or one piece of first quantity information is associated with multiple pieces (including all scenarios) of data type identification information included in the third information (for a composite-type data scenario, it may also be considered that one piece of first quantity information is associated with multiple pieces of data type identification information included in the third information).

Optionally, a one-to-one mapping relationship or a one-to-many mapping relationship exists between the first filtering requirement information and the data collection task identification information.

Optionally, a one-to-one mapping relationship or a one-to-many mapping relationship exists between the first filtering requirement information and the data type identification information.

Optionally, the first filtering requirement information is used to indicate a target condition required to be satisfied by collected data information transmitted in current round. In some scenarios, the total amount of data collected by the first device may be too large, while the current data collection requirement of the second device may not be large, so that the second device may restrict, by providing the first filtering requirement information to the first device, the contents of the collected data information transmitted by the first device. Optionally, the first filtering requirement information includes: filtering requirement information corresponding to the collected data information that is allowed to be transmitted, and/or filtering requirement information corresponding to the collected data information that is not allowed to be transmitted. Herein, the collected data that satisfies the condition of the filtering requirement information corresponding to the collected data information that is allowed to be transmitted can be transmitted by the first device, and the collected data that satisfies the condition of the filtering requirement information corresponding to the collected data information that is not allowed to be transmitted will not be transmitted by the first device.

Optionally, the first filtering requirement information and the data collection task identification information included in the third information are in a one-to-one mapping relationship or a one-to-many mapping relationship. That is, one piece of first filtering requirement information is associated with one piece of data collection task identification information included in the third information, or one piece of first filtering requirement information is associated with multiple pieces (including all scenarios) of data collection task identification information included in the third information.

Optionally, the first filtering requirement information and the data type identification information included in the third information are in a one-to-one mapping relationship or a one-to-many mapping relationship. That is, one piece of first filtering requirement information is associated with one piece of data type identification information included in the third information, or one piece of first filtering requirement information is associated with multiple pieces (including all scenarios) of data type identification information included in the third information (for a composite-type data scenario, it may also be considered that one piece of first filtering requirement information is associated with multiple pieces of data type identification information included in the third information).

For example, the first device locally collects 60 sets of RSRP measurement results corresponding to each of three cells (respectively corresponding to [frequency point 1, PCI1], [frequency point 2, PCI8], and [frequency point 3, PCI21]). If the second device indicates that the first device only needs to transmit the measurement results of the cell corresponding to [frequency point 1, PCI1] through the first filtering requirement information, the first device only needs to transmit the 60 sets of RSRP measurement results corresponding to [frequency point 1, PCI1] to the second device.

Optionally, the description of the remaining portion of the operation S502 is similar to that of the operation S401, and will not be repeatedly described herein.

FIG. 6 is a flowchart of yet another communication method provided by an embodiment of the disclosure. As illustrated in FIG. 6, the communication method is applied to a data collection procedure, and the method includes the following operation S601 to S603.

At the operation S601, as an optional operation, a first device transmits fourth information to a second device, and the second device receives the fourth information transmitted by the first device.

At the operation S602, as an optional operation, the second device transmits third information to the first device, and the first device receives the third information transmitted by the second device.

At the operation S603, the first device transmits first information to the second device, and the second device receives the first information transmitted by the first device. The first information at least includes value field information or information field information corresponding to collected data information.

Optionally, in other embodiments, unlink the embodiment corresponding to FIG. 6, the communication method may include the operations S601 and S603 without the operation S602.

Optionally, the fourth information includes or indicates at least one of: at least one piece of data collection task identification information (information 11) associated with transmittable information; at least one piece of data type identification information (information 12) associated with the transmittable information; second quantity information (information 13) for indicating at least one of: a total amount of the transmittable information, an upper limit of the total amount, or a level of the total amount; or a characteristic quantity (information 14) associated with the transmittable information.

Optionally, the fourth information may be applied to the data collection procedure.

Optionally, the fourth information may be used to provide status information of the collected data information to the second device.

Optionally, resource configuration information for the first device to transmit the fourth information may be determined by the first device based on a pre-configuration, or may be indicated by the second device to the first device, or may be default, or may be predefined by a protocol. Optionally, resource configuration information for the second device to receive the fourth information may be determined by the second device based on a pre-configuration, or may be indicated by the first device to the second device, or may be default, or may be predefined by a protocol.

Optionally, the transmissible information may include collected data in a transmissible state. Optionally, the second quantity information is used to indicate a total amount of data currently included in the collected data information in the transmittable state, or an upper limit of the total amount, or a level of the total amount.

Optionally, the first device may, through the information 11, inform the second device of which piece(s) of data collection task identification information is/are associated with collected data information stored in the first device, where the collected data information is in the transmittable state.

Optionally, the first device may, through the information 12, inform the second device of which piece(s) of data type identification information is/are associated with collected data information stored in the first device, where the collected data information is in the transmittable state.

Optionally, a one-to-one mapping relationship or a one-to-many mapping relationship exists between the second quantity information and the data collection task identification information.

Optionally, a one-to-one mapping relationship or a one-to-many mapping relationship exists between the second quantity information and the data type identification information.

Optionally, the meaning of the second quantity information is similar to the meaning of the first quantity information.

Optionally, the second quantity information and the data collection task identification information included in the fourth information are in a one-to-one mapping relationship or a one-to-many mapping relationship. That is, one piece of second quantity information is associated with one piece of data collection task identification information included in the fourth information, or one piece of second quantity information is associated with multiple pieces (including all scenarios) of data collection task identification information included in the fourth information.

Optionally, the second quantity information and the data type identification information included in the fourth information are in a one-to-one mapping relationship or a one-to-many mapping relationship. That is, one piece of second quantity information is associated with one piece of data type identification information included in the fourth information, or one piece of second quantity information is associated with multiple pieces (including all scenarios) data type identification information included in the fourth information (for a composite-type data scenario, it may also be considered that one piece of second quantity information is associated with multiple pieces of data type identification information included in the fourth information).

Optionally, the characteristic quantity associated with the transmittable information may include first characteristic information for describing the characteristic quantity associated with the collected data information in the transmittable state. For example, the first device collects the RSRP measurement results of the cells, in this case, at least one of frequency point information, PCI information, or beam information (for example, a Synchronization Signal Block (SSB) identifier, a Channel State Information-Reference Signal (CSI-RS)) of the measured cells may be referred to as the characteristic quantity. For another example, the first device collects its own location information, in this case, the distribution or distribution probability of the location information may be referred to as the characteristic quantity, and maximum distance and minimum distance information between the location information and a location reference point may be referred to as the characteristic quantity. Herein, the SSB may also be referred to as a Synchronization Signal/Physical Broadcast Channel Block (SS/PBCH block).

Optionally, the description of the remaining portion of the operation S603 is similar to that of the operation S401, the description of the remaining portion of the operation S602 is similar to that of the operation S501, and will not be repeatedly described herein.

FIG. 7 is a flowchart of still another communication method provided by an embodiment of the disclosure. As illustrated in FIG. 7, the communication method is applied to a data collection procedure, and the method includes the following operation S701 to S704.

At the operation S701, as an optional operation, a second device transmits fifth information to a first device, and the first device receives the fifth information transmitted by the second device.

At the operation S702, as an optional operation, the first device transmits fourth information to the second device, and the second device receives the fourth information transmitted by the first device.

At the operation S703, as an optional operation, the second device transmits third information to the first device, and the first device receives third information transmitted by the second device.

At the operation S704, the first device transmits first information to the second device, and the second device receives the first information transmitted by the first device. The first information at least includes value field information or information field information corresponding to collected data information.

Alternatively, in other embodiments, unlink the embodiment corresponding to FIG. 7, the communication method may include the operations S701 and S704 without the operations S702 and S703, or the communication method may include the operations S701, S702 and S704 without the operation S703, or the communication method may include the operations S701, S703 and S704 without the operation S702.

Optionally, the fifth information includes or indicates at least one of: at least one piece of data collection task identification information (information 21); at least one piece of data type identification information (information 22) associated with a data collection task; restriction configuration information (information 23) associated with the data collection task; or data reporting configuration information (information 24) associated with the data collection task.

Optionally, the at least one piece of data type identification information associated with the data collection task may include data type identification information corresponding to at least one piece of collected data associated with the data collection task.

Optionally, the fifth information may be applied to the data collection procedure.

Optionally, the fifth information may be used for configuring configuration information associated with the data collection procedure. Optionally, the fifth information may be configuration information associated with the data collection procedure.

Optionally, resource configuration information for the second device to transmit the fifth information may be determined by the second device based on a pre-configuration, or may be indicated by the first device to the second device, or may be default, or may be predefined by a protocol. Optionally, resource configuration information for the first device to receive the fifth information may be determined by the first device based on a pre-configuration, or may be indicated by the second device to the first device, or may be default, or may be predefined by a protocol.

In some embodiments, the method further includes that: the first device performs, based on at least part of the fifth information, at least one of: adding at least one data collection task, modifying at least one data collection task, or deleting at least one data collection task.

For the second device, at least part of the fifth information transmitted by the second device to the first device is used for the first device to perform at least one of: adding at least one data collection task, modifying at least one data collection task, or deleting at least one data collection task.

For example, the first device may perform at least one of adding, modifying, or deleting on data collection task(s) corresponding to the at least one piece of data collection task identification information through the at least one piece of data collection task identification information. For another example, the first device may determine the associated at least one data collection task through the data type identification information, and perform at least one of: adding the at least one data collection task, modifying the at least one data collection task, or deleting the at least one data collection task.

The data collection task identification information (information 21) is described as follows. The data collection task identifier(s) may be logical identification information. Optionally, in order to facilitate the administration of the data collection tasks, the second device may assign a data collection task identifier to each data collection task when configuring the data collection task(s).

The data type identification information (information 22) corresponding to at least one piece of collected data associated with the data collection task is described as follows. The core of the data collection task is to collect one or more types of data, and the information 22 provides the data type identification information corresponding to the at least one piece of collected data. Because the information 22 is further associated with the specific data collection task identifier, the first device can clarify, after acquiring the information 21 and the information 22 through the fifth information, that the data collection task(s) corresponding to the information 21 is/are to obtain one or more types of data corresponding to the information 22. Optionally, it is also possible to configure the information 22 separately without the information 21, which indicates that the first device needs to collect one or more types of data corresponding to the information 22.

Optionally, a one-to-one mapping relationship or a one-to-many mapping relationship exists between the restriction configuration information (information 23) associated with the data collection task and the data collection task identification information.

Optionally, a one-to-one mapping relationship or a one-to-many mapping relationship exists between the restriction configuration information associated with the data collection task and the data type identification information.

Optionally, the restriction configuration information associated with the data collection task(s) and the data collection task identifier(s) are in a one-to-one association relationship or a one-to-many association relationship. That is, one data collection task is associated with one set of restriction configuration information associated with the data collection task, or multiple data collection tasks (including all scenarios) are associated with one set of restriction configuration information associated with the data collection tasks. In other words, all types of data required to be collected for the one or more data collection tasks are constrained by the same set of restriction configuration information associated with the data collection task(s).

The restriction configuration information associated with the data collection task(s) and the data type identifier(s) are in a one-to-one association relationship or a one-to-many association relationship. That is, one data type identifier is associated with one set of restriction configuration information associated with the data collection task(s), or multiple data type identifiers (including all scenarios) are associated with one set of restriction configuration information associated with the data collection task(s). In other words, all types of data required to be collected for the data collection task(s) associated with the one or more data type identifiers are constrained by the same set of restriction configuration information associated with the data collection task(s).

Optionally, the restriction configuration information associated with the data collection task includes or indicates at least one of: time restriction information (information 31) associated with the data collection task; geographic area restriction information (information 32) associated with the data collection task; logical area restriction information (information 33) associated with the data collection task; scenario restriction information (information 34) associated with the data collection task; frequency point restriction information (information 35) associated with the data collection task; beam restriction information (information 36) associated with the data collection task; Radio Resource Control (RRC) state information (information 37) of a terminal device associated with the data collection task; identification information (information 38) corresponding to the restriction configuration information associated with the data collection task; speed state information (information 39) of the terminal device associated with the data collection task; or power range restriction information or power level restriction information (information 40), used by the terminal device, associated with the data collection task.

Optionally, the restriction configuration information associated with the data collection task is used to define a condition required to be satisfied by the collected data.

Optionally, the speed state information may include at least one of: high speed state information, medium-high speed state information, medium speed state information, medium-low speed state information, or low speed state information. Optionally, different types of speed state information corresponds to different speed ranges, and the different speed ranges may or may not overlap.

Optionally, the power level restriction information may include at least one of: a high power level, a medium-high power level, a medium power level, a medium-low power level, or a low power level. Optionally, different power levels correspond to different power ranges, and different power ranges may or may not overlap.

Optionally, the time restriction information includes or indicates at least one of: starting time information for executing the data collection task; ending time information for executing the data collection task; total duration information for executing the data collection task; minimum interval duration information between adjacent data records; or data recording time step information.

Optionally, the geographic area restriction information includes or indicates at least one of: longitude range information for executing the data collection task; latitude range information for executing the data collection task; altitude range information for executing the data collection task; reference point coordinate information for executing the data collection task; or maximum distance information between a measurement point and a reference point for executing the data collection task.

Optionally, the geographic area restriction information includes or indicates at least one of: a Global Location Number (GLN) or a Cell Global Identity (CGI).

Optionally, the coordinate information may include two-dimensional coordinate information or three-dimensional coordinate information.

Optionally, the logical area restriction information includes or indicates at least one of: one or more pieces of PCI information associated with cell(s) for executing the data collection task; one or more pieces of cell identity information associated with cell(s) for executing the data collection task; at least one piece of Tracking Area Code (TAC) information for executing the data collection task; at least one piece of Radio Access Network Area Code (RANAC) information for executing the data collection task; at least one piece of Public Land Mobile Network (PLMN) identity information for executing the data collection task; at least one piece of Stand-alone Non-public Network (SNPN) identity information for executing the data collection task; at least one piece of Closed Access Group (CAG) identity information for executing the data collection task; or at least one piece of country identification information for executing the data collection task.

Optionally, the cell identity information may be composed of PCI + frequency point information, or may be represented by CGI information, or may be represented by a serving cell index.

Optionally, the scenario restriction information includes or indicates at least one of: a scenario of a radio link failure, a scenario of a handover, a scenario of a Master Cell Group (MCG) connection failure, a scenario of a Secondary Cell Group (SCG) connection failure, a scenario of a Secondary Cell (SCell) connection failure, a scenario of a Listen Before Talk (LBT), a scenario of an Automatic Neighbor Relation (ANR), a scenario of a random access, a scenario of a connection establishment failure, both a scenario of a connection recovery failure and a scenario of a connection re-establishment failure, a scenario of a small data transmission failure, a scenario of a beam failure, a scenario of a beam failure recovery, a scenario of a cell reselection, or a scenario of an intra-device interference.

Optionally, the scenario of the handover may be further divided into a handover success scenario and a handover failure scenario.

Optionally, regardless of the handover success scenario or the handover failure scenario, the scenario of the handover may be further subdivided into the following sub-scenarios: a conventional handover scenario, a conditional handover scenario, an L1/L2 handover scenario, a Dual Active Protocol Stack (DAPS) handover scenario, a too early handover scenario, a too late handover scenario, a scenario of a handover to a wrong cell, an MCG handover failure scenario, and an SCG handover failure scenario.

Optionally, the scenario of the LBT may be further divided into an LBT success scenario and an LBT failure scenario.

Optionally, the random access scenario may be further divided into a random access success scenario and a random access failure scenario. Optionally, regardless of the random access success scenario or the random access failure scenario, the random access scenario may be further divided into sub-scenarios based on random access causes. For example, the random access causes include one of: initial access from an idle state, an RRC connection re-establishment, downlink or uplink data arrival with uplink out of synchronization, uplink data arrival with no Physical Uplink Control Channel (PUCCH) resources for transmitting status reporting, a status reporting failure, a synchronous reconfiguration or handover, a connection recovery initiated from an inactive state, time alignment for a second Time Alignment Group (TAG), request for other system broadcast messages, a beam failure recovery, consecutive uplink LBT failures occur on a SpCell cell, a small data transmission procedure triggered in an inactive state or a random access procedure triggered in a connected state for positioning purposes, and time alignment establishment during a SCell adding procedure.

Optionally, one or more scenarios indicated by the scenario restriction information may be further associated with a reporting data set, and each reporting data set includes one or more types of data. Optionally, the association relationship between each reporting data set and the corresponding scenario restriction information is specified by default or predefined by a protocol. For example, an SCG connection failure scenario is associated with a SCG failure reporting data set, and the SCG failure reporting data set includes data with at least one type of an SCG failure cause value, a serving cell measurement result at the time of the SCG failure, and a neighboring cell measurement result at the time of the SCG failure. Optionally, the protocol explicitly specifies which types of data should be included in the SCG failure reporting data set associated with the SCG connection failure scenario.

Optionally, the following coexistence relationship exists between the reporting data set associated with the scenario restriction information and the information 22 included in the fifth information. In an implementation scenario 1, if the fifth information does not include the information 22 (or the information 22 is not configured in a configuration procedure) but includes the information 34, the first device reports the collected data to the second device based on the reporting data set associated with the information 34. In an implementation scenario 2, if the fifth information includes the information 22 but does not include the information 34 (or the information 34 is not configured in a configuration procedure), the first device reports the collected data to the second device based on at least one data type corresponding to the information 22. In an implementation scenario 3, if the fifth information includes both the information 22 and the information 34, the data reporting method followed by the first device is any one of the following reporting methods.

In a reporting method 1 of the implementation scenario 3: the first device only reports the collected data based on requirements of the information 22, that is, ignoring requirements of the reporting data set associated with the information 34. In this case, the information 34 is still used for constraining the scenario conditions required to be satisfied by the reporting data (the data required to be reported by the information 22).

In a reporting method 2 of the implementation scenario 3: the first device only reports the collected data based on requirements of the reporting data set associated with the information 34, that is, ignoring requirements of the data reporting corresponding to the information 22;

In a reporting method 3 of the implementation scenario 3: the first device reports the collected data based on the requirements of the reporting data set associated with the information 34 and the requirements of the data reporting corresponding to the information 22, that is, both the data included in the reporting data set associated with the information 34 and the data specified by the information 22 are reported to the second device by the first device. Optionally, the data included in the reporting data set associated with the information 34 and the data specified by the information 22 may be reported separately or in a combination manner, which is not limited in the disclosure.

Optionally, the frequency point restriction information includes or indicates at least one of: frequency point identification information; Synchronization signal/physical broadcast channel (SS/PBCH) block Measurement Time Configuration (SMTC) information associated with a frequency point; band identification information associated with the frequency point; band combination information associated with the frequency point; Subcarrier Spacing (SCS) information associated with the frequency point; or PCI list information associated with the frequency point.

Optionally, the beam restriction information includes or indicates at least one of: identification information of at least one SSB to be measured, identification information of at least one CSI-RS to be measured, beam pattern mapping information corresponding to an SSB to be measured, or beam pattern mapping information corresponding to a CSI-RS to be measured.

Optionally, the RRC state information includes or indicates at least one of: an idle state, an inactive state, an active state, an any cell selection state, a camped on any cell state, a data-transmission-only state, or a data-reception-only state.

Optionally, the identification information corresponding to the restriction configuration information may include logical identification information corresponding to the restriction configuration information.

Optionally, the identification information (information 38) corresponding to the restriction configuration information associated with the data collection task is described as follows. The logical identification information corresponding to the restriction configuration information associated with the data collection task is set to simplify the data collection task configuration procedure. If multiple data collection tasks use the same set of restriction configuration information associated with the data collection tasks, in order to avoid redundant configurations of the same set of restriction configuration information by different data collection tasks, the all (one or more sets of) restriction configuration information associated with the data collection tasks in the fifth information can be separately configured, where when performing the separate configuration, a piece of logical identification information is assigned to each set of the restriction configuration information associated with the data collection task(s). In this way, each data collection task identifier can be associated with a logical identifier corresponding to restriction configuration information associated with a data collection task, and further associated with the specific configuration information, thereby greatly simplifying the data collection task configuration procedure.

Optionally, the data reporting configuration information (information 24) associated with the data collection task is described as follows.

Optionally, the data reporting configuration information includes event identification information for triggering data reporting and/or parameter configuration information associated with an event for triggering the data reporting.

Optionally, the event for triggering the data reporting includes or indicates at least one of: an event for periodically triggering reporting, an event for semi-periodically triggering reporting, or an event for triggering reporting by an event type.

Optionally, in a case where the event for triggering the data reporting includes an event for periodically triggering reporting and/or an event for semi-periodically triggering reporting, the parameter configuration information includes or indicates at least one of: a configuration of a starting time for the data reporting, a configuration of a period for the data reporting, a configuration of a time interval for the data reporting, or a configuration of a maximum number of times for the data reporting.

Optionally, the data reporting configuration information associated with the data collection task is used to define the reporting mechanism for the collected data.

Optionally, for the event for periodically triggering reporting or the event for semi-periodically triggering reporting, the parameter configuration information associated with the event for triggering the data reporting includes a configuration of a period (or time interval) for the data reporting and/or a configuration of a maximum number of times for the data reporting. The difference between the event for periodically triggering reporting and the event for semi-periodically triggering reporting is that: the event for semi-periodically triggering reporting does not initiate data reporting immediately upon configuration, instead, it requires dynamic activation by the configuration party (such as the second device) to start periodic data reporting; while the event for periodically triggering reporting starts periodic data reporting immediately upon configuration.

Optionally, the event type includes or indicates at least one of: an event (event type 1) related to a measurement result of a serving cell and/or a measurement result of a neighboring cell; an event (event type 2) related to at least one of: location information of the first device, location information of the second device, or location information of a reference point; an event (event type 3) related to time information; an event (event type 4) related to remaining memory or currently occupied memory of the first device; an event (event type 5) related to a quantity of data collected by the first device; or an event (event type 6) related to a configuration associated with a current serving cell and/or a configuration associated with neighboring cell(s).

Optionally, the event types 1 to 6 may be arbitrarily combined to obtain new event(s), which is not limited in the disclosure.

Optionally, the event related to the time information may include an event related to absolute time information and/or an event related to relative time information.

The event type 1 is described as follows. The measurement quantity corresponding to the measurement result includes at least one of: a RSRP, a Reference Signal Received Quality (RSRQ), a Received Signal Strength Indicator (RSSI), a Signal to Interference plus Noise Ratio (SINR), a Received Signal Code Power (RSCP), or a Signal Noise Ratio (SNR). The measurement reference signal, on which the measurement result is based, is an SSB or a CSI-RS. For the event type 1, the parameter configuration information associated with the event for triggering the data reporting includes at least threshold information (one or more thresholds) related to the measurement result.

The event type 2 is described as follows. The location information includes at least one of longitude information, latitude information, altitude information, coordinate information, or a CGI. For the event type 2, the parameter configuration information associated with the event for triggering the data reporting includes at least threshold information (one or more thresholds) related to the location information.

The event type 3 is described as follows. The parameter configuration information associated with the event for triggering the data reporting includes at least one piece of absolute time information and/or duration information.

The event type 4 is described as follows. The parameter configuration information associated with the event for triggering the data reporting includes at least threshold information (one or more thresholds) related to a memory.

The event type 5 is described as follows. The parameter configuration information associated with the event for triggering the data reporting includes at least threshold information (one or more thresholds) related to a quantity of the collected data.

The event type 6 is described as follows. The event related to the configuration associated with the current serving cell and/or the configuration associated with the neighboring cell(s) can be understood as triggering the operation of reporting the collected data under the condition that the parameter configuration information (provided through the fifth information) associated with the event type 6 matches the configuration information associated with the current serving cell of the first device and/or the configuration associated with the neighboring cell(s).

Optionally, the parameter configuration information associated with the event for triggering the data reporting includes or indicates at least one of: threshold information related to a measurement result; threshold information related to location information; at least one piece of time information; at least one piece of duration information; threshold information related to a memory; threshold information related to a data quantity; or configuration information for comparison with a configuration associated with a current serving cell and/or a configuration associated with neighboring cell(s).

Optionally, in any one of the embodiments of the disclosure, the threshold information may include one or more thresholds.

Optionally, the threshold information related to the measurement result may include: threshold information related to a serving cell measurement result and/or threshold information related to a neighboring cell measurement result.

Optionally, the threshold information related to the location information may include: threshold information related to location information of the first device, and/or threshold information related to location information of the second device, and/or threshold information related to location information of a reference point.

Optionally, the threshold information related to the memory may include: threshold information related to the remaining memory of the first device and/or threshold information related to the currently occupied memory of the first device.

For example, the configuration associated with the current serving cell may include an RSRP of the current serving cell, and the configuration information for comparison with the configuration associated with the current serving cell may include whether the RSRP of the serving cell is greater than or equal to a first RSRP. Thus, if the first device measures that the RSRP of the current serving cell is greater than or equal to the first RSRP, the first device may report the first information to the second device.

Optionally, the configuration associated with the cell includes or indicates at least one of: frequency point information associated with the cell, PCI information associated with the cell, TAC information associated with the cell, RANAC information associated with the cell, PLMN information associated with the cell, SNPN information associated with the cell, CAG information associated with the cell, band information associated with the cell, or CGI information associated with the cell.

Optionally, the description of the remaining portion of the operation S704 is similar to that of the operation S401, the description of the remaining portion of the operation S703 is similar to that of the operation S501, and the description of the remaining portion of the operation S702 is similar to that of the operation S601, which will not be repeatedly described herein.

The data collection procedure in the embodiments of the disclosure is different from the data collection procedure centered on the functional scenario in the related art. The core of the data collection mechanism in the related art is to define and collect data based on the functional scenario, where one set of types of data is collected for one functional scenario, the data collection procedures associated with different functional scenarios are generally different, and this set of types of data as a whole is used by the data collection node to optimize the corresponding function. In the embodiments of the disclosure, the data collection is performed by centering on data types. The core of the data collection mechanism in the embodiments of the disclosure is that: the data collection node collects one or more types of data at one time, the collected data may be associated with functional scenarios or may not be associated with any functional scenario, the data collection procedures associated with different types of collected data are basically the same, the collected data may be used by the data collection node for any purpose (e.g., a function optimization, data sharing, a data store) or for an optimization of at least one functional scenario, and even the collected information may be shared with a third party (e.g., different communication nodes, different operators, different manufacturers, and the like).

The data collection method in the embodiments of the disclosure may specifically include the following two aspects: a description of the data reporting operation associated with the data collection procedure (associated with the operations S702 to S704 in FIG. 7); a description of the configuration operation associated with the data collection procedure (associated with the operation S701 in FIG. 7).

The embodiments of the disclosure provides a communication method (also referred to as a control method of a data collection), which can produce at least one of the following beneficial effects. The data collection procedure is normalized, which can realize the data collection task of any data type in any scenario while avoiding the complex data collection procedure (FIG. 7 is the common processes of all types of data collection tasks), thereby greatly simplifying the standardization efforts of different data collection tasks. A cross-domain sharing of the collected data is realized, data type identification information is introduced, which makes the classification and retrieval of the collected data simple and efficient, and thus the method is suitable for cross-domain operation of data sharing. The collected data may or may not be associated with functional characteristics, so that the use of the collected data is more extensive and is not limited to specific function optimization. New business growth opportunities have emerged for data collectors, the collected data can be monetized via data stores for external commercial use, and big data sources are created for third-party manufacturers. A big data foundation is laid for the large-scale introduction of AI functions in communication systems.

Preferred embodiments of the present disclosure have been described in detail with reference to the accompanying drawings, but the present disclosure is not limited to the specific details of the above embodiments. Within the scope of the technical conception of the present disclosure, various simple modifications can be made to the technical solutions of the present disclosure, and these simple modifications all fall within the scope of protection of the present disclosure. For example, various specific technical features described in the above specific embodiments may be combined in any suitable manner without conflict. Various possible combinations are not further described in the present disclosure to avoid unnecessary repetition. For another example, various different implementations of the present disclosure can also be combined arbitrarily, which should also be considered as the content disclosed by the present disclosure as long as they do not violate the conception of the present disclosure. For another example, various embodiments described in the present disclosure and/or the technical features in various embodiments can be arbitrarily combined with the related technologies without conflict, and the technical solution obtained after the combination should also fall within the scope of protection of the present disclosure.

It should also be understood that in the various method embodiments of the present disclosure, the size of the serial numbers of the above-mentioned various processes do not indicate a sequence of execution. The sequence of execution of the processes should be determined by their functions and inherent logics, and should not constitute a limitation on the implementation process of the embodiments of the present disclosure. Further, in embodiments of the present disclosure, the terms "downlink", "uplink" and "sidelink" are used to indicate transmission directions of signals or data. The term "downlink" is used to denote that the transmission direction of the signals or the data is a first direction from a station to user equipment in a cell. The term "uplink" is used to denote that the transmission direction of the signals or the data is a second direction from the user equipment in the cell to the station. The term "sidelink" is used to denote that the transmission direction of the signals or the data is a third direction from first user equipment to second user equipment. For example, "downlink signal" means that the transmission direction of the signal is the first direction. In addition, in the embodiments of the present disclosure, the term "and/or" refers to only an association relationship for describing associated objects and represents that three relationships may exist. Specifically, A and/or B may represent three cases: i.e., only A exists, both A and B exist, and only B exists. Furthermore, character "/" in the disclosure usually represents that previous and next associated objects form an "or" relationship.

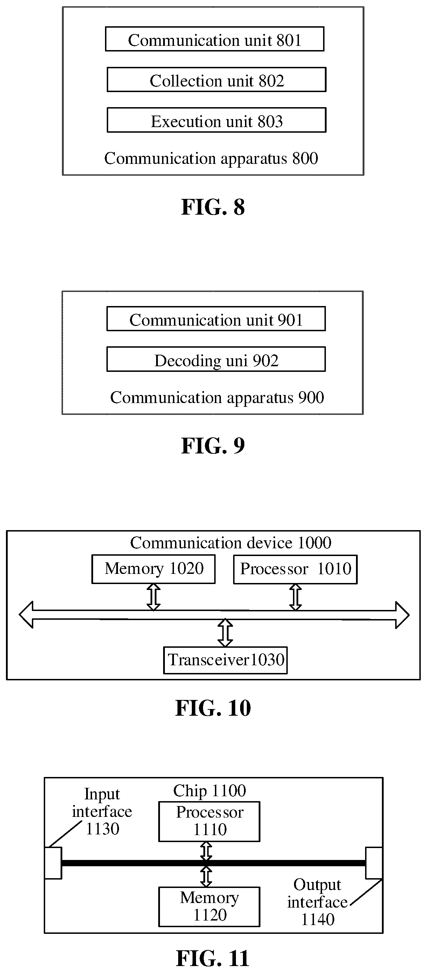

FIG. 8 is a structural diagram of a communication apparatus provided in an embodiment of the disclosure, which is applied to a first device. As illustrated in FIG. 8, the communication apparatus 800 includes a communication unit 801.

The communication unit 801 is configured to transmit first information to a second device, where the first information at least includes value field information or information field information corresponding to collected data information.

Herein, the first information is associated with second information, and the second information includes at least one of: data type identification information; format indication information corresponding to the value field information or the information field information; length indication information corresponding to the value field information or the information field information; first indication information for indicating whether current type of data is last single-type data contained in a data sample in the collected data information; second indication information for indicating whether current single-type data contained in the data sample in the collected data information appears; quantity indication information of data sample(s) contained in the collected data information; indication information of whether a current data sample is a last data sample in the collected data information; or data collection task identification information.

In some embodiments, the communication apparatus 800 further includes a collection unit 802, configured to collect the collected information.

In some embodiments, the communication unit 801 is further configured to transmit part or all of the second information to the second device.

In some embodiments, the communication unit 801 is further configured to receive part or all of the second information transmitted by the second device.

In some embodiments, part or all of the second information is default information, or predefined information, or information predefined by a protocol, or information determined by the communication apparatus 800 or the second device based on a pre-configuration.

In some embodiments, a resource for transmitting the first information is a control plane resource or a user plane resource.

In some embodiments, the communication unit 801 is further configured to: receive third information transmitted by the second device. Herein, the third information includes or indicates at least one of: at least one piece of data collection task identification information; at least one piece of data type identification information; resource configuration information for transmitting the first information; first quantity information for indicating at least one of: a total amount of information required to be transmitted, an upper limit of the total amount, or a level of the total amount; or first filtering requirement information for indicating a target condition required to be satisfied by the information required to be transmitted.

In some embodiments, the resource configuration information includes or indicates at least one of: time domain resource information, frequency domain resource information, spatial domain resource information, code domain resource information, LCID information, or configuration information corresponding to an RB.

In some embodiments, a one-to-one mapping relationship or a one-to-many mapping relationship exists between the resource configuration information and the data collection task identification information; and/or a one-to-one mapping relationship or a one-to-many mapping relationship exists between the resource configuration information and the data type identification information.

In some embodiments, a one-to-one mapping relationship or a one-to-many mapping relationship exists between the first quantity information and the data collection task identification information; and/or a one-to-one mapping relationship or a one-to-many mapping relationship exists between the first quantity information and the data type identification information.

In some embodiments, a one-to-one mapping relationship or a one-to-many mapping relationship exists between the first filtering requirement information and the data collection task identification information; and/or a one-to-one mapping relationship or a one-to-many mapping relationship exists between the first filtering requirement information and the data type identification information.

In some embodiments, the communication unit 801 is further configured to transmit fourth information to the second device. Herein, the fourth information includes or indicates at least one of: at least one piece of data collection task identification information associated with transmittable information; at least one piece of data type identification information associated with the transmittable information; second quantity information for indicating at least one of: a total amount of the transmittable information, an upper limit of the total amount, or a level of the total amount; or a characteristic quantity associated with the transmittable information.

In some embodiments, a one-to-one mapping relationship or a one-to-many mapping relationship exists between the second quantity information and the data collection task identification information; and/or a one-to-one mapping relationship or a one-to-many mapping relationship exists between the second quantity information and the data type identification information.

In some embodiments, the communication unit 801 is further configured to receive fifth information transmitted by the second device. Herein, the fifth information includes or indicates at least one of: at least one piece of data collection task identification information; at least one piece of data type identification information associated with a data collection task; restriction configuration information associated with the data collection task; or data reporting configuration information associated with the data collection task.

In some embodiments, the communication apparatus 800 further includes an execution unit 803, configured to perform, based on at least part of the fifth information, at least one of: adding at least one data collection task; modifying the at least one data collection task; or deleting the at least one data collection task.

In some embodiments, a one-to-one mapping relationship or a one-to-many mapping relationship exists between the restriction configuration information associated with the data collection task and the data collection task identification information; and/or a one-to-one mapping relationship or a one-to-many mapping relationship exists between the restriction configuration information associated with the data collection task and the data type identification information.

In some embodiments, the restriction configuration information associated with the data collection task includes or indicates at least one of: time restriction information associated with the data collection task; geographic area restriction information associated with the data collection task; logical area restriction information associated with the data collection task; scenario restriction information associated with the data collection task; frequency point restriction information associated with the data collection task; beam restriction information associated with the data collection task; RRC state information of a terminal device associated with the data collection task; identification information corresponding to the restriction configuration information associated with the data collection task; speed state information of the terminal device associated with the data collection task; or power range restriction information or power level restriction information, used by the terminal device, associated with the data collection task.

In some embodiments, the time restriction information includes or indicates at least one of: starting time information for executing the data collection task; ending time information for executing the data collection task; total duration information for executing the data collection task; minimum interval duration information between adjacent data records; or data recording time step information.

In some embodiments, the geographic area restriction information includes or indicates at least one of: longitude range information for executing the data collection task; latitude range information for executing the data collection task; altitude range information for executing the data collection task; reference point coordinate information for executing the data collection task; or maximum distance information between a measurement point and a reference point for executing the data collection task.

In some embodiments, the logical area restriction information includes or indicates at least one of: one or more pieces of PCI information associated with cell(s) for executing the data collection task; one or more pieces of cell identity information associated with the cell(s) for executing the data collection task; at least one piece of TAC information for executing the data collection task; at least one piece of RANAC information for executing the data collection task; at least one piece of PLMN identity information for executing the data collection task; at least one piece of SNPN identity information for executing the data collection task; at least one piece of CAG identity information for executing the data collection task; or at least one piece of country identification information for executing the data collection task.

In some embodiments, the scenario restriction information includes or indicates at least one of: a scenario of a radio link failure, a scenario of a handover, a scenario of a MCG connection failure, a scenario of a SCG connection failure, a scenario of a SCell connection failure, a scenario of a LBT, a scenario of an ANR, a scenario of a random access, a scenario of a connection establishment failure, a scenario of a connection recovery failure and a scenario of a connection re-establishment failure, a scenario of a small data transmission failure, a scenario of a beam failure, a scenario of a beam failure recovery, a scenario of a cell reselection, or a scenario of an intra-device interference.

In some embodiments, the frequency point restriction information includes or indicates at least one of: frequency point identification information; SMTC information associated with a frequency point; band identification information associated with the frequency point; band combination information associated with the frequency point; SCS information associated with the frequency point; or PCI list information associated with the frequency point.

In some embodiments, the beam restriction information includes or indicates at least one of: identification information of at least one SSB to be measured, identification information of at least one CSI-RS to be measured, beam pattern mapping information corresponding to an SSB to be measured, or beam pattern mapping information corresponding to a CSI-RS to be measured.

In some embodiments, the RRC state information includes or indicates at least one of: an idle state, an inactive state, an active state, an any cell selection state, a camped on any cell state, a data-transmission-only state, or a data-reception-only state.

In some embodiments, the data reporting configuration information includes: event identification information for triggering data reporting and/or parameter configuration information associated with an event for triggering the data reporting.

In some embodiments, the event for triggering the data reporting includes or indicates at least one of: an event for periodically triggering reporting, an event for semi-periodically triggering reporting, or an event for triggering reporting by an event type.

In some embodiments, in a case where the event for triggering the data reporting includes an event for periodically triggering reporting and/or an event for semi-periodically triggering reporting, the parameter configuration information includes or indicates at least one of: a configuration of a starting time for the data reporting, a configuration of a period for the data reporting, a configuration of a time interval for the data reporting, or a configuration of a maximum number of times for the data reporting.

In some embodiments, the event type indicates or indicates at least one of: an event related to a measurement result of a serving cell and/or a measurement result of a neighboring cell; an event related to at least one of: location information of the first device, location information of the second device, or location information of a reference point; an event related to time information; an event related to remaining memory or currently occupied memory of the first device; an event related to a quantity of data collected by the first device; or an event related to a configuration associated with a current serving cell and/or a configuration associated with neighboring cell(s).

In some embodiments, the parameter configuration information associated with the event for triggering the data reporting includes or indicates at least one of: threshold information related to a measurement result; threshold information related to location information; at least one piece of time information; at least one piece of duration information; threshold information related to a memory; threshold information related to a data quantity; or configuration information for comparison with a configuration associated with a current serving cell and/or a configuration associated with neighboring cell(s).

In some embodiments, the configuration associated with the cell includes or indicates at least one of: frequency point information associated with the cell, PCI information associated with the cell, TAC information associated with the cell, RANAC information associated with the cell, PLMN information associated with the cell, SNPN information associated with the cell, CAG information associated with the cell, band information associated with the cell, or CGI information associated with the cell.

In some embodiments, the first device is a terminal device, and the second device is a network device; or the first device is a first terminal device, and the second device is a second terminal device; or the first device is a network device, and the second device is a terminal device; or the first device is a first network device, and the second device is a second network device.

In some embodiments, the network device includes one or a combination of at least two of: an access network device, a core network device, an OAM device, or a data collection device.

FIG. 9 is a structural diagram of another communication apparatus provided in an embodiment of the disclosure, which is applied to a second device. As illustrated in FIG. 9, the communication apparatus 900 includes a communication unit 901.

The communication unit 901 is configured to receive first information transmitted by a first device, where the first information at least includes value field information or information field information corresponding to collected data information.

Herein, the first information is associated with second information, and the second information includes at least one of: data type identification information; format indication information corresponding to the value field information or the information field information; length indication information corresponding to the value field information or the information field information; first indication information for indicating whether current type of data is last single-type data contained in a data sample in the collected data information; second indication information for indicating whether current single-type data contained in the data sample in the collected data information appears; quantity indication information of data sample(s) contained in the collected data information; indication information of whether a current data sample is a last data sample in the collected data information; or data collection task identification information.

In some embodiments, the communication apparatus 900 further includes a decoding unit 902, configured to decode the value field information or the information field information corresponding to the collected data information based on the second information.

In some embodiments, the communication unit 901 is further configured to receive part or all of the second information transmitted by the first device.

In some embodiments, the communication unit 901 is further configured to transmit part or all of the second information to the first device.

In some embodiments, part or all of the second information is default information, or predefined information, or information predefined by a protocol, or information determined by the first device or the communication apparatus 900 based on a pre-configuration.

In some embodiments, a resource for transmitting the first information is a control plane resource or a user plane resource.

In some embodiments, the communication unit 901 is further configured to transmit third information to the first device. Herein, the third information includes or indicates at least one of: at least one piece of data collection task identification information; at least one piece of data type identification information; resource configuration information for transmitting the first information; first quantity information for indicating at least one of: a total amount of information required to be transmitted, an upper limit of the total amount, or a level of the total amount; or first filtering requirement information for indicating a target condition required to be satisfied by the information required to be transmitted.

In some embodiments, the resource configuration information includes or indicates at least one of: time domain resource information, frequency domain resource information, spatial domain resource information, code domain resource information, LCID information, or configuration information corresponding to an RB.

In some embodiments, a one-to-one mapping relationship or a one-to-many mapping relationship exists between the resource configuration information and the data collection task identification information; and/or a one-to-one mapping relationship or a one-to-many mapping relationship exists between the resource configuration information and the data type identification information.

In some embodiments, a one-to-one mapping relationship or a one-to-many mapping relationship exists between the first quantity information and the data collection task identification information; and/or a one-to-one mapping relationship or a one-to-many mapping relationship exists between the first quantity information and the data type identification information.

In some embodiments, a one-to-one mapping relationship or a one-to-many mapping relationship exists between the first filtering requirement information and the data collection task identification information; and/or a one-to-one mapping relationship or a one-to-many mapping relationship exists between the first filtering requirement information and the data type identification information.

In some embodiments, the communication unit 901 is further configured to receive fourth information transmitted by the first device. Herein, the fourth information includes or indicates at least one of: at least one piece of data collection task identification information associated with transmittable information; at least one piece of data type identification information associated with the transmittable information; second quantity information for indicating at least one of: a total amount of the transmittable information, an upper limit of the total amount, or a level of the total amount; or a characteristic quantity associated with the transmittable information.

In some embodiments, a one-to-one mapping relationship or a one-to-many mapping relationship exists between the second quantity information and the data collection task identification information; and/or a one-to-one mapping relationship or a one-to-many mapping relationship exists between the second quantity information and the data type identification information.

In some embodiments, the communication unit 901 is further configured to transmit fifth information to the first device. Herein, the fifth information includes or indicates at least one of: at least one piece of data collection task identification information; at least one piece of data type identification information associated with a data collection task; restriction configuration information associated with the data collection task; or data reporting configuration information associated with the data collection task.

In some embodiments, at least part of the fifth information is used for the first device to perform at least one of: adding at least one data collection task; modifying the at least one data collection task; or deleting the at least one data collection task.

In some embodiments, a one-to-one mapping relationship or a one-to-many mapping relationship exists between the restriction configuration information associated with the data collection task and the data collection task identification information; and/or a one-to-one mapping relationship or a one-to-many mapping relationship exists between the restriction configuration information associated with the data collection task and the data type identification information.

In some embodiments, the restriction configuration information associated with the data collection task includes or indicates at least one of: time restriction information associated with the data collection task; geographic area restriction information associated with the data collection task; logical area restriction information associated with the data collection task; scenario restriction information associated with the data collection task; frequency point restriction information associated with the data collection task; beam restriction information associated with the data collection task; RRC state information of a terminal device associated with the data collection task; identification information corresponding to the restriction configuration information associated with the data collection task; speed state information of the terminal device associated with the data collection task; or power range restriction information or power level restriction information, used by the terminal device, associated with the data collection task.

In some embodiments, the time restriction information includes or indicates at least one of: starting time information for executing the data collection task; ending time information for executing the data collection task; total duration information for executing the data collection task; minimum interval duration information between adjacent data records; or data recording time step information.

In some embodiments, the geographic area restriction information includes or indicates at least one of: longitude range information for executing the data collection task; latitude range information for executing the data collection task; altitude range information for executing the data collection task; reference point coordinate information for executing the data collection task; or maximum distance information between a measurement point and a reference point for executing the data collection task.

In some embodiments, the logical area restriction information includes or indicates at least one of: one or more pieces of PCI information associated with cell(s) for executing the data collection task; one or more pieces of cell identity information associated with the cell(s) for executing the data collection task; at least one piece of TAC information for executing the data collection task; at least one piece of RANAC information for executing the data collection task; at least one piece of PLMN identity information for executing the data collection task; at least one piece of SNPN identity information for executing the data collection task; at least one piece of CAG identity information for executing the data collection task; or at least one piece of country identification information for executing the data collection task.

In some embodiments, the scenario restriction information includes or indicates at least one of: a scenario of a radio link failure, a scenario of a handover, a scenario of a MCG connection failure, a scenario of a SCG connection failure, a scenario of a SCell connection failure, a scenario of a LBT, a scenario of an ANR, a scenario of a random access, a scenario of a connection establishment failure, a scenario of a connection recovery failure and a scenario of a connection re-establishment failure, a scenario of a small data transmission failure, a scenario of a beam failure, a scenario of a beam failure recovery, a scenario of a cell reselection, or a scenario of an intra-device interference.

In some embodiments, the frequency point restriction information includes or indicates at least one of: frequency point identification information; SMTC information associated with a frequency point; band identification information associated with the frequency point; band combination information associated with the frequency point; SCS information associated with the frequency point; or PCI list information associated with the frequency point.

In some embodiments, the beam restriction information includes or indicates at least one of: identification information of at least one SSB to be measured, identification information of at least one CSI-RS to be measured, beam pattern mapping information corresponding to an SSB to be measured, or beam pattern mapping information corresponding to a CSI-RS to be measured.

In some embodiments, the RRC state information includes or indicates at least one of: an idle state, an inactive state, an active state, an any cell selection state, a camped on any cell state, a data-transmission-only state, or a data-reception-only state.

In some embodiments, the data reporting configuration information includes: event identification information for triggering data reporting and/or parameter configuration information associated with an event for triggering the data reporting.

In some embodiments, the event for triggering the data reporting includes or indicates at least one of: an event for periodically triggering reporting, an event for semi-periodically triggering reporting, or an event for triggering reporting by an event type.

In some embodiments, in a case where the event for triggering the data reporting includes an event for periodically triggering reporting and/or an event for semi-periodically triggering reporting, the parameter configuration information includes or indicates at least one of: a configuration of a starting time for the data reporting, a configuration of a period for the data reporting, a configuration of a time interval for the data reporting, or a configuration of a maximum number of times for the data reporting.

In some embodiments, the event type indicates or indicates at least one of: an event related to a measurement result of a serving cell and/or a measurement result of a neighboring cell; an event related to at least one of: location information of the first device, location information of the second device, or location information of a reference point; an event related to time information; an event related to remaining memory or currently occupied memory of the first device; an event related to a quantity of data collected by the first device; or an event related to a configuration associated with a current serving cell and/or a configuration associated with neighboring cell(s).

In some embodiments, the parameter configuration information associated with the event for triggering the data reporting includes or indicates at least one of: threshold information related to a measurement result; threshold information related to location information; at least one piece of time information; at least one piece of duration information; threshold information related to a memory; threshold information related to a data quantity; or configuration information for comparison with a configuration associated with a current serving cell and/or a configuration associated with neighboring cell(s).

In some embodiments, the configuration associated with the cell includes or indicates at least one of: frequency point information associated with the cell, PCI information associated with the cell, TAC information associated with the cell, RANAC information associated with the cell, PLMN information associated with the cell, SNPN information associated with the cell, CAG information associated with the cell, band information associated with the cell, or CGI information associated with the cell.

In some embodiments, the first device is a terminal device, and the second device is a network device; or the first device is a first terminal device, and the second device is a second terminal device; or the first device is a network device, and the second device is a terminal device; or the first device is a first network device, and the second device is a second network device.

In some embodiments, the network device includes one or a combination of at least two of: an access network device, a core network device, an OAM device, or a data collection device.

Those skilled in the art would appreciate that the relevant description of the above communication apparatuses according to the embodiments of the present disclosure may be understood with reference to the relevant description of the communication methods according to the embodiments of the present disclosure.

FIG. 10 is a structural diagram of a communication device provided in an embodiment of the disclosure. The communication device 1000 may include one of a first device or a second device. The communication device 1000 illustrated in FIG. 10 may include a processor 1010 and a memory 1020. The memory 1020 stores a computer program. The processor 1010 calls the computer program stored in the memory 1020 and runs the computer program to cause the communication device 1000 to perform the communication method in any one of the above embodiments.

For example, if the communication device 1000 includes the first device, the first device includes the processor 1010 and the memory 1020. The memory 1020 stores a computer program. The processor 1010 calls the computer program stored in the memory 1020 and runs the computer program to cause the first device to perform the communication method in any one of the above embodiments.

For example, if the communication device 1000 includes the second device, the second device includes the processor 1010 and the memory 1020. The memory 1020 stores a computer program. The processor 1010 calls the computer program stored in the memory 1020 and runs the computer program to cause the second device to perform the communication method in any one of the above embodiments.

Optionally, the memory 1020 may be a separate device independent of the processor 1010 or may be integrated in the processor 1010.

In some embodiments, as illustrated in FIG. 10, the communication device 1000 may further include a transceiver 1030, and the processor 1010 may control the transceiver 1030 to communicate with other devices. Specifically, the processor 1010 may control the transceiver 1030 to transmit information or data to other devices, or receive information or data from other devices.

The transceiver 1030 may include a transmitter and a receiver. The transceiver 1030 may further include one or more antennas.

In some embodiments, the communication device 1000 may specifically be the network device in the embodiments of the present disclosure, and the communication device 1000 may implement corresponding processes implemented by the network device in various methods of the embodiments of the present disclosure, which are not elaborated here for the sake of brevity.

In some embodiments, the communication device 1000 may specifically be the mobile terminal/the terminal device in the embodiments of the present disclosure, and the communication device 1000 may implement corresponding processes implemented by the mobile terminal/the terminal device in various methods of the embodiments of the present disclosure, which are not elaborated here for the sake of brevity.

An embodiment of the disclosure also provides a computer storage medium having stored thereon one or more programs that, when executed by one or more processors, cause the one or more processors to perform the communication method in any one of the embodiments of the disclosure.

In some embodiments, the computer-readable storage medium may be applied to the first device or the second device in the embodiments of the disclosure, and the computer program causes the computer to execute corresponding processes implemented by the first device or the second device in various methods of the embodiments of the present disclosure, which are not elaborated here for the sake of brevity.

FIG. 11 is a structural diagram of a chip according to an embodiment of the disclosure. The chip 1100 illustrated in FIG. 11 includes a processor 1110 configured to invoke and run a computer program from a memory to perform the method in any one of the embodiments of the present disclosure.

In some embodiments, as illustrated in FIG. 11, the chip 1100 may further include a memory 1120, and the processor 1110 may invoke and run a computer program from the memory 1120 to perform the methods in the embodiments of the present disclosure.

The memory 1120 may be a separate device independent of the processor 1110, or may be integrated in the processor 1110.

In some embodiments, the chip 1100 may further include an input interface 1130. The processor 1110 may control the input interface 1130 to communicate with other devices or chips. Specifically, the processor 1110 may control the input interface 1130 to acquire information or data transmitted by other devices or chips.

In some embodiments, the chip 1100 may further include an output interface 1140. The processor 1110 may control the output interface 1140 to communicate with other devices or chips. Specifically, the processor 1110 may control the output interface 1140 to output information or data to other devices or chips.

In some embodiments, the chip may be applied to the network device in the embodiments of the present disclosure, and the chip may implement corresponding processes implemented by the network device in various methods of the embodiments of the present disclosure, which are not elaborated here for the sake of brevity.

In some embodiments, the chip may be applied to the mobile terminal/the terminal device in the embodiments of the present disclosure, and the chip may implement corresponding processes implemented by the mobile terminal/the terminal device in various methods of the embodiments of the present disclosure, which are not elaborated here for the sake of brevity.

It should be understood that the chip mentioned in the embodiments of the present disclosure may also be referred to as a system-level chip, a system chip, a chip system, or a system-on-chip chip, or the like.

An embodiment of the disclosure further provides a computer program product including a computer storage medium. The computer storage medium stores a computer program including instructions executable by at least one processor that, when executed by the at least one processor, perform the communication method in any one of the embodiments of the disclosure.

In some embodiments, the computer program product may be applied to the first device or the second device in the embodiments of the disclosure, and the computer program instructions cause a computer to execute corresponding processes implemented by the first device or the second device in various methods of the embodiments of the present disclosure, which are not elaborated here for the sake of brevity.

Optionally, the computer program product in the embodiment of the disclosure may also be referred to as a software product in other embodiments.

An embodiment of the disclosure further provides a computer program that causes a computer to execute the communication method in any one of the embodiments of the disclosure.

In some embodiments, the computer program may be applied to the first device or the second device in the embodiments of the disclosure, and the computer program causes a computer to execute corresponding processes implemented by the first device or the second device in various methods of the embodiments of the present disclosure when the computer program is run on the computer, which are not elaborated here for the sake of brevity.

The processor, the communication apparatus or the chip in the embodiments of the disclosure may be an integrated circuit chip having signal processing capability. In implementation, the various operations of the above method embodiments may be accomplished by integrated logic circuit of hardware or instructions in the form of software in a processor. The processor, the communication apparatus, or the chip described above may include an integration of any one or more of: a general purpose processor, an Application Specific Integrated Circuit (ASIC), a Digital Signal Processor (DSP), a Digital Signal Processing Device (DSPD), a Programmable Logic Device (PLD), a Field Programmable Gate Array (FPGA), a Central Processing Unit (CPU), a Graphics Processing Unit (GPU), an embedded neural-network processing unit (NPU), a controller, a microcontroller, a microprocessor, a programmable logic device, a discrete gate or transistor logic device, a discrete hardware component. The methods, operations and logic block diagrams disclosed in embodiments of the present disclosure may be implemented or performed. The general purpose processor may be a microprocessor or the processor may be any conventional processor or the like. The operations of the methods disclosed in combination with the embodiments of the present disclosure can be directly embodied as execution of a hardware decoding processor or combined execution of hardware and software modules in the decoding processor. The software module may be located in a Random-Access Memory (RAM), a flash memory, a Read-Only Memory (ROM), a Programmable ROM (PROM) or an Electrically Erasable EPROM (EEPROM), a register and other storage medium mature in the art. The storage medium is located in the memory, and the processor reads information in the memory and completes the operations of the above methods in combination with its hardware.

It is understood that the memory or the computer storage medium in embodiments of the present disclosure may be volatile memory or non-volatile memory or may include both volatile and non-volatile memories. The non-volatile memory may be an ROM, a PROM, an Erasable PROM (EPROM), an EEPROM, or a flash memory. The volatile memory may be an RAM which serves as an external cache. By way of illustration but not limitation, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory of the systems and methods described herein is intended to include but not be limited to these and any other suitable types of memories.

It should be understood that the memory or the computer storage medium described above is exemplary but not limiting. For example, the memory in embodiments of the present disclosure may also be a SRAM, a DRAM, a SDRAM, a DDR SDRAM, an ESDRAM, an SLDRAM, a DR RAM, or the like. That is, the memory in embodiments of the present disclosure is intended to include but not be limited to these and any other suitable types of memories.

Those of ordinary skill in the art would appreciate that the various exemplary units and algorithm operations described in connection with the embodiments in the present disclosure can be implemented in electronic hardware or a combination of computer software and electronic hardware. Whether these functions are performed in hardware or software depends on the specific application and design constraints of the technical solutions. Those of ordinary skill may use a different method for each particular application to implement the described functionality, but such implementation should not be considered outside the scope of the present disclosure.

Those skilled in the art would clearly appreciate that for the specific operating processes of the above-described systems, devices and units, the references may be made to the corresponding processes in the aforementioned method embodiments and would not be repeated herein, for convenience and brevity of description.

In several embodiments provided in the present disclosure, it should be understood that the disclosed systems, devices and methods may be implemented in other ways. For example, the above-described embodiments of the devices are only schematic, for example, the division of the unit is only a logical function division, and in practice, there may be another division method, for example, multiple units or components may be combined or integrated into another system, or some features may be ignored or not performed. Furthermore, the coupling or direct coupling or communication connection between each other illustrated or discussed may be indirect coupling or communication connection through some interfaces, devices or units, and may be electrical, mechanical or other forms.

The units illustrated as separate components may or may not be physically separated, and the components displayed as unit may or may not be physical units, that is, the units and the components may be located in one place, or may be distributed over multiple network units. Part or all of the units can be selected according to the actual needs to achieve the purpose of the embodiments.

In addition, various functional units in the embodiments of the present disclosure may be integrated in one processing unit, or various units may exist physically alone, or two or more units may be integrated in one unit.

In any one of the embodiments of the disclosure, a time interval, a time period, within a duration range, within a time duration, or within a time window, or the like may include both the endpoint times, or may include part of the endpoint times (for example, including the left endpoint time but not including the right endpoint time, or including the right endpoint time but not including the left endpoint time), or may not include the endpoint times.

The functions may be stored in a computer readable storage medium if implemented in the form of software functional units and sold or used as stand-alone products. In view of this understanding, the technical solutions of the present disclosure in essence, or the part that contributes to the related art, or the part of the technical solutions can be embodied in the form of a software product. The computer software product is stored in a storage medium and includes instructions that enables a computer device (which may be a personal computer, server, network device, or the like) to perform all or part of the operations of the methods described in various embodiments of the present disclosure. The aforementioned storage medium includes a USB flash disk, a removable hard disk, a ROM, a RAM, a magnetic disk or an optical disk and other medium capable of storing program codes.

The above-mentioned is only the specific implementation of the present disclosure, but the scope of protection of the present disclosure is not limited thereto. Any variation or substitution readily conceivable by those skilled in the art within the scope of the technology disclosed in the present disclosure shall be covered by the scope of protection of the present disclosure. Therefore, the scope of protection of the present disclosure should be subject to the scope of protection of the claims.

## Claims

1. A communication method, applied to a data collection procedure, the method comprising:
transmitting, by a first device, first information to a second device, the first information at least comprising: value field information or information field information corresponding to collected data information;
wherein the first information is associated with second information, and the second information comprises at least one of:
data type identification information;
format indication information corresponding to the value field information or the information field information;
length indication information corresponding to the value field information or the information field information;
first indication information for indicating whether current type of data is last single-type data contained in a data sample in the collected data information;
second indication information for indicating whether current single-type data contained in the data sample in the collected data information appears;
quantity indication information of data sample(s) contained in the collected data information;
indication information of whether a current data sample is a last data sample in the collected data information; or
data collection task identification information.

2. The method of claim 1, further comprising:
transmitting, by the first device, part or all of the second information to the second device.

3. The method of claim 1 or 2, further comprising:
receiving, by the first device, part or all of the second information transmitted by the second device.

4. The method of any one of claims 1 to 3, wherein part or all of the second information is default information, or predefined information, or information predefined by a protocol, or information determined by the first device or the second device based on a pre-configuration.

5. The method of any one of claims 1 to 4, wherein a resource for transmitting the first information is a control plane resource or a user plane resource.

6. The method of any of claims 1 to 5, further comprising:
receiving, by the first device, third information transmitted by the second device, wherein the third information comprises or indicates at least one of:
at least one piece of data collection task identification information;
at least one piece of data type identification information;
resource configuration information for transmitting the first information;
first quantity information for indicating at least one of: a total amount of information required to be transmitted, an upper limit of the total amount, or a level of the total amount; or
first filtering requirement information for indicating a target condition required to be satisfied by the information required to be transmitted.

7. The method of claim 6, wherein the resource configuration information comprises or indicates at least one of: time domain resource information, frequency domain resource information, spatial domain resource information, code domain resource information, Logical Channel Identifier (LCID) information, or configuration information corresponding to a Radio Bearer (RB).

8. The method of claim 6 or 7, wherein a one-to-one mapping relationship or a one-to-many mapping relationship exists between the resource configuration information and the data collection task identification information; and/or
a one-to-one mapping relationship or a one-to-many mapping relationship exists between the resource configuration information and the data type identification information.

9. The method of any one of claims 6 to 8, wherein a one-to-one mapping relationship or a one-to-many mapping relationship exists between the first quantity information and the data collection task identification information; and/or
a one-to-one mapping relationship or a one-to-many mapping relationship exists between the first quantity information and the data type identification information.

10. The method of any one of claims 6 to 9, wherein a one-to-one mapping relationship or a one-to-many mapping relationship exists between the first filtering requirement information and the data collection task identification information; and/or
a one-to-one mapping relationship or a one-to-many mapping relationship exists between the first filtering requirement information and the data type identification information.

11. The method of any one of claims 1 to 9, further comprising:
transmitting, by the first device, fourth information to the second device, wherein the fourth information comprises or indicates at least one of:
at least one piece of data collection task identification information associated with transmittable information;
at least one piece of data type identification information associated with the transmittable information;
second quantity information for indicating at least one of: a total amount of the transmittable information, an upper limit of the total amount, or a level of the total amount; or
a characteristic quantity associated with the transmittable information.

12. The method of claim 11, wherein a one-to-one mapping relationship or a one-to-many mapping relationship exists between the second quantity information and the data collection task identification information; and/or
a one-to-one mapping relationship or a one-to-many mapping relationship exists between the second quantity information and the data type identification information.

13. The method of any of claims 1 to 12, further comprising:
receiving, by the first device, fifth information transmitted by the second device, wherein the fifth information comprises or indicates at least one of:
at least one piece of data collection task identification information;
at least one piece of data type identification information associated with a data collection task;
restriction configuration information associated with the data collection task; or
data reporting configuration information associated with the data collection task.

14. The method of claim 13, further comprising:
performing, by the first device, based on at least part of the fifth information, at least one of:
adding at least one data collection task;
modifying the at least one data collection task; or
deleting the at least one data collection task.

15. The method of claim 13 or 14, wherein a one-to-one mapping relationship or a one-to-many mapping relationship exists between the restriction configuration information associated with the data collection task and the data collection task identification information; and/or
a one-to-one mapping relationship or a one-to-many mapping relationship exists between the restriction configuration information associated with the data collection task and the data type identification information.

16. The method of any one of claims 13 to 15, wherein the restriction configuration information associated with the data collection task comprises or indicates at least one of:
time restriction information associated with the data collection task;
geographic area restriction information associated with the data collection task;
logical area restriction information associated with the data collection task;
scenario restriction information associated with the data collection task;
frequency point restriction information associated with the data collection task;
beam restriction information associated with the data collection task;
Radio Resource Control (RRC) state information of a terminal device associated with the data collection task;
identification information corresponding to the restriction configuration information associated with the data collection task;
speed state information of the terminal device associated with the data collection task; or
power range restriction information or power level restriction information, used by the terminal device, associated with the data collection task.

17. The method of claim 16, wherein the time restriction information comprises or indicates at least one of:
starting time information for executing the data collection task;
ending time information for executing the data collection task;
total duration information for executing the data collection task;
minimum interval duration information between adjacent data records; or
data recording time step information.

18. The method of claim 16 or 17, wherein the geographic area restriction information comprises or indicates at least one of:
longitude range information for executing the data collection task;
latitude range information for executing the data collection task;
altitude range information for executing the data collection task;
reference point coordinate information for executing the data collection task; or
maximum distance information between a measurement point and a reference point for executing the data collection task.

19. The method of any one of claims 16 to 18, wherein the logical area restriction information comprises or indicates at least one of:
one or more pieces of Physical Cell Identity (PCI) information associated with cell(s) for executing the data collection task;
one or more pieces of cell identity information associated with the cell(s) for executing the data collection task;
at least one piece of Tracking Area Code (TAC) information for executing the data collection task;
at least one piece of Radio Access Network Area Code (RANAC) information for executing the data collection task;
at least one piece of Public Land Mobile Network (PLMN) identity information for executing the data collection task;
at least one piece of Stand-alone Non-public Network (SNPN) identity information for executing the data collection task;
at least one piece of Closed Access Group (CAG) identity information for executing the data collection task; or
at least one piece of country identification information for executing the data collection task.

20. The method of any one of claims 16 to 19, wherein the scenario restriction information comprises or indicates at least one of: a scenario of a radio link failure, a scenario of a handover, a scenario of a Master Cell Group (MCG) connection failure, a scenario of a Secondary Cell Group (SCG) connection failure, a scenario of a Secondary Cell (SCell) connection failure, a scenario of a Listen Before Talk (LBT), a scenario of an Automatic Neighbor Relation (ANR), a scenario of a random access, a scenario of a connection establishment failure, a scenario of a connection recovery failure and a scenario of a connection re-establishment failure, a scenario of a small data transmission failure, a scenario of a beam failure, a scenario of a beam failure recovery, a scenario of a cell reselection, or a scenario of an intra-device interference.

21. The method of any one of claims 16 to 20, wherein the frequency point restriction information comprises or indicates at least one of:
frequency point identification information;
Synchronization signal/physical broadcast channel (SS/PBCH) block Measurement Time Configuration (SMTC) information associated with a frequency point;
band identification information associated with the frequency point;
band combination information associated with the frequency point;
Subcarrier Spacing (SCS) information associated with the frequency point; or
PCI list information associated with the frequency point.

22. The method of any one of claims 16 to 21, wherein the beam restriction information comprises or indicates at least one of: identification information of at least one synchronization signal block (SSB) to be measured, identification information of at least one Channel State Information Reference Signal (CSI-RS) to be measured, beam pattern mapping information corresponding to an SSB to be measured, or beam pattern mapping information corresponding to a CSI-RS to be measured.

23. The method of any one of claims 16 to 22, wherein the RRC state information comprises or indicates at least one of: an idle state, an inactive state, an active state, an any cell selection state, a camped on any cell state, a data-transmission-only state, or a data-reception-only state.

24. The method of any one of claims 13 to 23, wherein the data reporting configuration information comprises: event identification information for triggering data reporting and/or parameter configuration information associated with an event for triggering the data reporting.

25. The method of claim 24, wherein the event for triggering the data reporting comprises or indicates at least one of: an event for periodically triggering reporting, an event for semi-periodically triggering reporting, or an event for triggering reporting by an event type.

26. The method of claim 24 or 25, wherein in a case where the event for triggering the data reporting comprises an event for periodically triggering reporting and/or an event for semi-periodically triggering reporting, the parameter configuration information comprises or indicates at least one of: a configuration of a starting time for the data reporting, a configuration of a period for the data reporting, a configuration of a time interval for the data reporting, or a configuration of a maximum number of times for the data reporting.

27. The method of claim 25, wherein the event type comprises or indicates at least one of:
an event related to a measurement result of a serving cell and/or a measurement result of a neighboring cell;
an event related to at least one of: location information of the first device, location information of the second device, or location information of a reference point;
an event related to time information;
an event related to remaining memory or currently occupied memory of the first device;
an event related to a quantity of data collected by the first device; or
an event related to a configuration associated with a current serving cell and/or a configuration associated with neighboring cell(s).

28. The method of any one of claims 24 to 27, wherein the parameter configuration information associated with the event for triggering the data reporting comprises or indicates at least one of:
threshold information related to a measurement result;
threshold information related to location information;
at least one piece of time information;
at least one piece of duration information;
threshold information related to a memory;
threshold information related to a data quantity; or
configuration information for comparison with a configuration associated with a current serving cell and/or a configuration associated with neighboring cell(s).

29. The method of claim 27 or 28, wherein the configuration associated with the cell comprises or indicates at least one of: frequency point information associated with the cell, PCI information associated with the cell, TAC information associated with the cell, RANAC information associated with the cell, PLMN information associated with the cell, SNPN information associated with the cell, CAG information associated with the cell, band information associated with the cell, or Cell Global Identity (CGI) information associated with the cell.

30. The method of any one of claims 1 to 29, wherein
the first device is a terminal device, and the second device is a network device; or
the first device is a first terminal device, and the second device is a second terminal device; or
the first device is a network device, and the second device is a terminal device; or
the first device is a first network device, and the second device is a second network device.

31. The method of claim 30, wherein the network device comprises one or a combination of at least two of:
an access network device, a core network device, an Operation Administration and Maintenance (OAM) device, or a data collection device.

32. A communication method, applied to a data collection procedure, the method comprising:
receiving, by a second device, first information transmitted by a first device, the first information at least comprising: value field information or information field information corresponding to collected data information;
wherein the first information is associated with second information, and the second information comprises at least one of:
data type identification information;
format indication information corresponding to the value field information or the information field information;
length indication information corresponding to the value field information or the information field information;
first indication information for indicating whether current type of data is last single-type data contained in a data sample in the collected data information;
second indication information for indicating whether current single-type data contained in the data sample in the collected data information appears;
quantity indication information of data sample(s) contained in the collected data information;
indication information of whether a current data sample is a last data sample in the collected data information; or
data collection task identification information.

33. The method of claim 32, further comprising:
receiving, by the second device, part or all of the second information transmitted by the first device.

34. The method of claim 32 or 33, further comprising:
transmitting, by the second device, part or all of the second information to the first device.

35. The method of any one of claims 32 to 34, wherein part or all of the second information is default information, or predefined information, or information predefined by a protocol, or information determined by the first device or the second device based on a pre-configuration.

36. The method of any one of claims 32 to 35, wherein a resource for transmitting the first information is a control plane resource or a user plane resource.

37. The method of any of claims 32 to 36, further comprising:
transmitting, by the second device, third information to the first device, wherein the third information comprises or indicates at least one of:
at least one piece of data collection task identification information;
at least one piece of data type identification information;
resource configuration information for transmitting the first information;
first quantity information for indicating at least one of: a total amount of information required to be transmitted, an upper limit of the total amount, or a level of the total amount; or
first filtering requirement information for indicating a target condition required to be satisfied by the information required to be transmitted.

38. The method of claim 37, wherein the resource configuration information comprises or indicates at least one of: time domain resource information, frequency domain resource information, spatial domain resource information, code domain resource information, Logical Channel Identifier (LCID) information, or configuration information corresponding to a Radio Bearer (RB).

39. The method of claim 37 or 38, wherein a one-to-one mapping relationship or a one-to-many mapping relationship exists between the resource configuration information and the data collection task identification information; and/or
a one-to-one mapping relationship or a one-to-many mapping relationship exists between the resource configuration information and the data type identification information.

40. The method of any one of claims 37 to 39, wherein a one-to-one mapping relationship or a one-to-many mapping relationship exists between the first quantity information and the data collection task identification information; and/or
a one-to-one mapping relationship or a one-to-many mapping relationship exists between the first quantity information and the data type identification information.

41. The method of any one of claims 37 to 40, wherein a one-to-one mapping relationship or a one-to-many mapping relationship exists between the first filtering requirement information and the data collection task identification information; and/or
a one-to-one mapping relationship or a one-to-many mapping relationship exists between the first filtering requirement information and the data type identification information.

42. The method of any one of claims 32 to 41, further comprising:
receiving, by the second device, fourth information transmitted by the first device, wherein the fourth information comprises or indicates at least one of:
at least one piece of data collection task identification information associated with transmittable information;
at least one piece of data type identification information associated with the transmittable information;
second quantity information for indicating at least one of: a total amount of the transmittable information, an upper limit of the total amount, or a level of the total amount; or
a characteristic quantity associated with the transmittable information.

43. The method of claim 42, wherein a one-to-one mapping relationship or a one-to-many mapping relationship exists between the second quantity information and the data collection task identification information; and/or
a one-to-one mapping relationship or a one-to-many mapping relationship exists between the second quantity information and the data type identification information.

44. The method of any of claims 32 to 43, further comprising:
transmitting, by the second device, fifth information to the first device, wherein the fifth information comprises or indicates at least one of:
at least one piece of data collection task identification information;
at least one piece of data type identification information associated with a data collection task;
restriction configuration information associated with the data collection task; or
data reporting configuration information associated with the data collection task.

45. The method of claim 44, wherein at least part of the fifth information is used for the first device to perform at least one of:
adding at least one data collection task;
modifying the at least one data collection task; or
deleting the at least one data collection task.

46. The method of claim 44 or 45, wherein a one-to-one mapping relationship or a one-to-many mapping relationship exists between the restriction configuration information associated with the data collection task and the data collection task identification information; and/or
a one-to-one mapping relationship or a one-to-many mapping relationship exists between the restriction configuration information associated with the data collection task and the data type identification information.

47. The method of any one of claims 44 to 46, wherein the restriction configuration information associated with the data collection task comprises or indicates at least one of:
time restriction information associated with the data collection task;
geographic area restriction information associated with the data collection task;
logical area restriction information associated with the data collection task;
scenario restriction information associated with the data collection task;
frequency point restriction information associated with the data collection task;
beam restriction information associated with the data collection task;
Radio Resource Control (RRC) state information of a terminal device associated with the data collection task;
identification information corresponding to the restriction configuration information associated with the data collection task;
speed state information of the terminal device associated with the data collection task; or
power range restriction information or power level restriction information, used by the terminal device, associated with the data collection task.

48. The method of claim 47, wherein the time restriction information comprises or indicates at least one of:
starting time information for executing the data collection task;
ending time information for executing the data collection task;
total duration information for executing the data collection task;
minimum interval duration information between adjacent data records; or
data recording time step information.

49. The method of claim 47 or 48, wherein the geographic area restriction information comprises or indicates at least one of:
longitude range information for executing the data collection task;
latitude range information for executing the data collection task;
altitude range information for executing the data collection task;
reference point coordinate information for executing the data collection task; or
maximum distance information between a measurement point and a reference point for executing the data collection task.

50. The method of any one of claims 47 to 49, wherein the logical area restriction information comprises or indicates at least one of:
one or more pieces of Physical Cell Identity (PCI) information associated with cell(s) for executing the data collection task;
one or more pieces of cell identity information associated with the cell(s) for executing the data collection task;
at least one piece of Tracking Area Code (TAC) information for executing the data collection task;
at least one piece of Radio Access Network Area Code (RANAC) information for executing the data collection task;
at least one piece of Public Land Mobile Network (PLMN) identity information for executing the data collection task;
at least one piece of Stand-alone Non-public Network (SNPN) identity information for executing the data collection task;
at least one piece of Closed Access Group (CAG) identity information for executing the data collection task; or
at least one piece of country identification information for executing the data collection task.

51. The method of any one of claims 47 to 50, wherein the scenario restriction information comprises or indicates at least one of: a scenario of a radio link failure, a scenario of a handover, a scenario of a Master Cell Group (MCG) connection failure, a scenario of a Secondary Cell Group (SCG) connection failure, a scenario of a Secondary Cell (SCell) connection failure, a scenario of a Listen Before Talk (LBT), a scenario of an Automatic Neighbor Relation (ANR), a scenario of a random access, a scenario of a connection establishment failure, a scenario of a connection recovery failure and a scenario of a connection re-establishment failure, a scenario of a small data transmission failure, a scenario of a beam failure, a scenario of a beam failure recovery, a scenario of a cell reselection, or a scenario of an intra-device interference.

52. The method of any one of claims 47 to 51, wherein the frequency point restriction information comprises or indicates at least one of:
frequency point identification information;
Synchronization signal/physical broadcast channel (SS/PBCH) block Measurement Time Configuration (SMTC) information associated with a frequency point;
band identification information associated with the frequency point;
band combination information associated with the frequency point;
Subcarrier Spacing (SCS) information associated with the frequency point; or
PCI list information associated with the frequency point.

53. The method of any one of claims 47 to 52, wherein the beam restriction information comprises or indicates at least one of: identification information of at least one synchronization signal block (SSB) to be measured, identification information of at least one Channel State Information Reference Signal (CSI-RS) to be measured, beam pattern mapping information corresponding to an SSB to be measured, or beam pattern mapping information corresponding to a CSI-RS to be measured.

54. The method of any one of claims 47 to 53, wherein the RRC state information comprises or indicates at least one of: an idle state, an inactive state, an active state, an any cell selection state, a camped on any cell state, a data-transmission-only state, or a data-reception-only state.

55. The method of any one of claims 44 to 54, wherein the data reporting configuration information comprises: event identification information for triggering data reporting and/or parameter configuration information associated with an event for triggering the data reporting.

56. The method of claim 55, wherein the event for triggering the data reporting comprises or indicates at least one of: an event for periodically triggering reporting, an event for semi-periodically triggering reporting, or an event for triggering reporting by an event type.

57. The method of claim 55 or 56, wherein in a case where the event for triggering the data reporting comprises an event for periodically triggering reporting and/or an event for semi-periodically triggering reporting, the parameter configuration information comprises or indicates at least one of: a configuration of a starting time for the data reporting, a configuration of a period for the data reporting, a configuration of a time interval for the data reporting, or a configuration of a maximum number of times for the data reporting.

58. The method of claim 56, wherein the event type comprises or indicates at least one of:
an event related to a measurement result of a serving cell and/or a measurement result of a neighboring cell;
an event related to at least one of: location information of the first device, location information of the second device, or location information of a reference point;
an event related to time information;
an event related to remaining memory or currently occupied memory of the first device;
an event related to a quantity of data collected by the first device; or
an event related to a configuration associated with a current serving cell and/or a configuration associated with neighboring cell(s).

59. The method of any one of claims 55 to 58, wherein the parameter configuration information associated with the event for triggering the data reporting comprises or indicates at least one of:
threshold information related to a measurement result;
threshold information related to location information;
at least one piece of time information;
at least one piece of duration information;
threshold information related to a memory;
threshold information related to a data quantity; or
configuration information for comparison with a configuration associated with a current serving cell and/or a configuration associated with neighboring cell(s).

60. The method of claim 58 or 59, wherein the configuration associated with the cell comprises or indicates at least one of: frequency point information associated with the cell, PCI information associated with the cell, TAC information associated with the cell, RANAC information associated with the cell, PLMN information associated with the cell, SNPN information associated with the cell, CAG information associated with the cell, band information associated with the cell, or Cell Global Identity (CGI) information associated with the cell.

61. The method of any one of claims 32 to 60, wherein
the first device is a terminal device, and the second device is a network device; or
the first device is a first terminal device, and the second device is a second terminal device; or
the first device is a network device, and the second device is a terminal device; or
the first device is a first network device, and the second device is a second network device.

62. The method of claim 61, wherein the network device comprises one or a combination of at least two of:
an access network device, a core network device, an Operation Administration and Maintenance (OAM) device, or a data collection device.

63. A communication apparatus, comprising:
a communication unit, configured to transmit first information to a second device, the first information at least comprising: value field information or information field information corresponding to collected data information;
wherein the first information is associated with second information, and the second information comprises at least one of:
data type identification information;
format indication information corresponding to the value field information or the information field information;
length indication information corresponding to the value field information or the information field information;
first indication information for indicating whether current type of data is last single-type data contained in a data sample in the collected data information;
second indication information for indicating whether current single-type data contained in the data sample in the collected data information appears;
quantity indication information of data sample(s) contained in the collected data information;
indication information of whether a current data sample is a last data sample in the collected data information; or
data collection task identification information.

64. A communication apparatus, comprising:
a communication unit, configured to receive first information transmitted by a second device, the first information at least comprising: value field information or information field information corresponding to collected data information;
wherein the first information is associated with second information, and the second information comprises at least one of:
data type identification information;
format indication information corresponding to the value field information or the information field information;
length indication information corresponding to the value field information or the information field information;
first indication information for indicating whether current type of data is last single-type data contained in a data sample in the collected data information;
second indication information for indicating whether current single-type data contained in the data sample in the collected data information appears;
quantity indication information of data sample(s) contained in the collected data information;
indication information of whether a current data sample is a last data sample in the collected data information; or
data collection task identification information.

65. A first device, comprising: a processor and a memory, wherein
the memory is configured to store a computer program; and
the processor is configured to call the computer program stored in the memory and run the computer program to cause the first device to perform the method of any one of claims 1 to 13.

66. A second device, comprising: a processor and a memory, wherein
the memory is configured to store a computer program; and
the processor is configured to call the computer program stored in the memory and run the computer program to cause the second device to perform the method of any one of claims 32 to 62.

67. A computer storage medium storing one or more programs that, when executed by one or more processors, cause the one or more processors to perform the method of any one of claims 1 to 31 or any one of claims 32 to 62.

68. A chip, comprising a processor, configured to call a computer program from a memory and run the computer program to perform the method of any one of claims 1 to 31 or any one of claims 32 to 62.

69. A computer program product, comprising a computer storage medium for storing a computer program, wherein the computer program comprises indications executable by at least one processor that, when executed by the at least one processor, perform the method of any one of claims 1 to 31 or any one of claims 32 to 62.

70. A computer program for causing a computer to perform the method of any one of claims 1 to 31 or any one of claims 32 to 62.
